(19) Europäisches Patentamt / European Patent Office / Office européen des brevets

(11) **EP 2 875 315 B1**

(12) **EUROPEAN PATENT SPECIFICATION**

(45) Date of publication and mention of the grant of the patent:
**05.09.2018 Bulletin 2018/36**

(21) Application number: **13822754.1**

(22) Date of filing: **16.07.2013**

(51) Int Cl.:
*H04N 13/20* (2018.01)   *B60R 1/00* (2006.01)
*G02B 27/28* (2006.01)   *H04N 5/357* (2011.01)
*H04N 9/04* (2006.01)   *H04N 13/00* (2018.01)
*G02B 27/26* (2006.01)   *G03B 35/10* (2006.01)

(86) International application number:
**PCT/JP2013/069720**

(87) International publication number:
**WO 2014/017409 (30.01.2014 Gazette 2014/05)**

(54) **STEREO CAMERA**

STEREOKAMERA

CAMÉRA STÉRÉOSCOPIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2012   JP 2012162344**
**27.09.2012   JP 2012214673**
**15.03.2013   JP 2013052721**

(43) Date of publication of application:
**27.05.2015   Bulletin 2015/22**

(73) Proprietor: **Ricoh Company, Ltd.**
**Tokyo 143-8555 (JP)**

(72) Inventor: **KASAHRA, Ryosuke**
**Ohta-ku, Tokyo 1438555 (JP)**

(74) Representative: **Round, Edward Mark et al**
**Marks & Clerk LLP**
**90 Long Acre**
**London WC2E 9RA (GB)**

(56) References cited:
**EP-A2- 2 251 227      JP-A- 2001 075 201**
**JP-A- 2005 505 950      JP-A- 2010 056 865**
**JP-A- 2012 123 098      JP-A- 2012 133 311**
**US-A- 4 295 153      US-A1- 2012 057 134**
**US-A1- 2012 170 000**

**Description**

TECHNICAL FIELD

The present invention relates to a stereo camera that obtains an image having disparity with respect to a photographic subject.

BACKGROUND ART

Conventionally, a driver support system that measures a distance between a driver's vehicle and a vehicle in front of the driver's vehicle having a speed adjustment function of the driver's vehicle and maintains the distance such as an ACC (Adaptive Cruise Control) has been developed. As a technique for measuring a distance to a vehicle in front, a stereo camera is conventionally known. The stereo camera calculates position information of a photographic subject by analyzing images shot by two imagers having disparity with respect to the photographic subject. As such a stereo camera, stereo cameras disclosed in Japanese Patent Application Publication Number 2010-243463, US Patent Number 7061532, and Japanese Patent Application Publication Number S62-217790 are known. As to stereo cameras disclosed in Japanese Patent Application Publication Number 2010-243463, and US Patent Number 7061532, light that forms two images obtained via optical members of left and right lens groups is incident onto a polarizing filter, so that light of two polarized components is obtained for each. Each of the obtained light of two polarized components is incident onto a polarizer region arranged corresponding to an arrangement of a light-receiving element in an image sensor of an imaging part, and received by the light-receiving element corresponding to a polarization direction of the light of two polarized components. From images formed by the light of two polarized components received by each light-receiving element, a disparity image is generated, and based on the disparity image, a distance to a photographic subject is measured. As to a stereo camera disclosed in Japanese Patent Application Publication Number S62-217790, a system has been proposed in which a polarizer divided into regions is incorporated on an image sensor, and a stereo image is imaged by allocating light that forms corresponding left and right images to each different incident angle onto a lens.

SUMMARY OF THE INVENTION

In order to measure the distance to the photographic subject accurately by the disparity between left and right images by use of the stereo cameras disclosed in Japanese patent Application Publication Number 2010-243463 and US Patent 7061532, corresponding left and right images are approximately corresponded to each other to an accuracy of 0.1 pixel. As such, it is necessary to correspond corresponding positions of pixels of the same images shot by left and right imaging systems. Therefore, for distance measurement, it is essential to photograph a chart or the like, and calibrate distortion including individual variability of a lens or a position of left and right imagers based on an image of the chart or the like.

However, in the stereo cameras disclosed in Japanese Patent Application Publication Number 2010-243463 and US Patent 7061532, optical members of left and right independent lens groups are used. Therefore, if there is only a difference in temperature between the left and right optical members, distortions of the left and right optical members are different from each other. As a result, in corresponding pixels of left and right imagers, a position error of several pixels may occur. Additionally, a metal mounting member is usually used for fixing a position between the left and right imagers, and a linear expansion coefficient is generally extremely large compared to glass. Therefore, due to a change in ambient temperature, a relationship between mounting positions of the left and right imagers is easily shifted, and in the left and right imagers, a position error of several pixels may occur in pixels corresponding to each other. Such a problem also occurs in a structure disclosed in Japanese Patent Application Publication Number S62-217790, and in a structure in which two light beams are combined by use of a mirror, it is not possible to exactly overlap incident angles of corresponding light from the right and light from the left which are incident onto the lens. That is, it is not possible to perfectly combine the light from the right and the light from the left. Therefore, likewise, in a case where distortion of a lens or the like is changed due to temperature, corresponding pixels in the left and right are shifted. In order to correct such an error due to the change in ambient temperature, it is necessary to perform calibration including correction of distortion of an optical member, and correction of mounting positions of left and right imagers as needed, and therefore, there is a problem in that an apparatus itself is expensive.

An object of the present invention is to provide a stereo camera at low cost that is not affected by a change in distortion of a lens, and a change in a mounting position of a mounting member of an imager due to a change in temperature.

US4295153A discloses a stereo camera that obtains an image having disparity with respect to a photographic subject, comprising a polarization combiner that combines optical paths of left light and right light, directions of polarization of which are different in a perpendicular direction and which form two images having disparity, into one; an imager that captures an image having at least two polarized components; and an optical member that focuses the combined left light and right light onto the imager.

The invention is in the stereo camera of claim 1.

BRIEF DESCRIPTION OF DRAWINGS

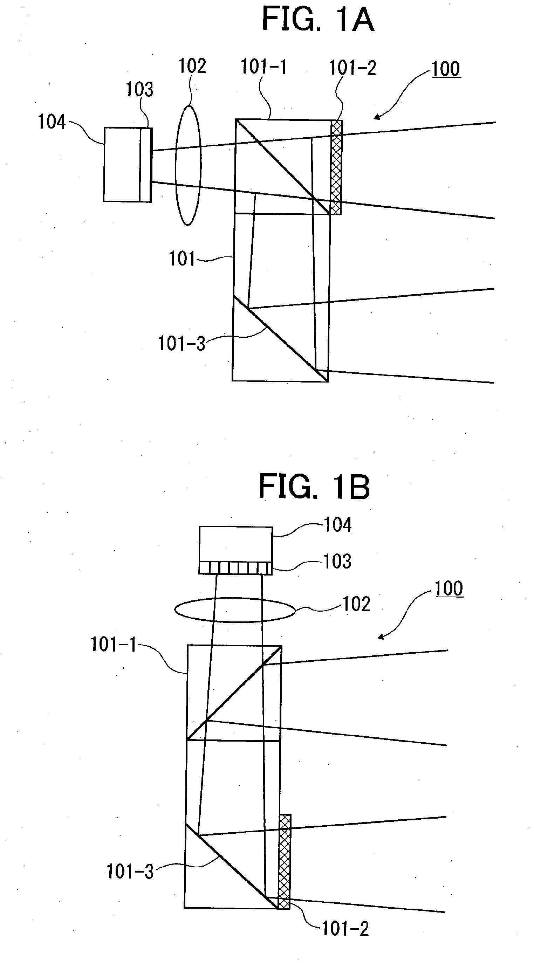

Each of FIG. 1A and 1B is a schematic diagram that illustrates a structure of a stereo camera of Example 1.

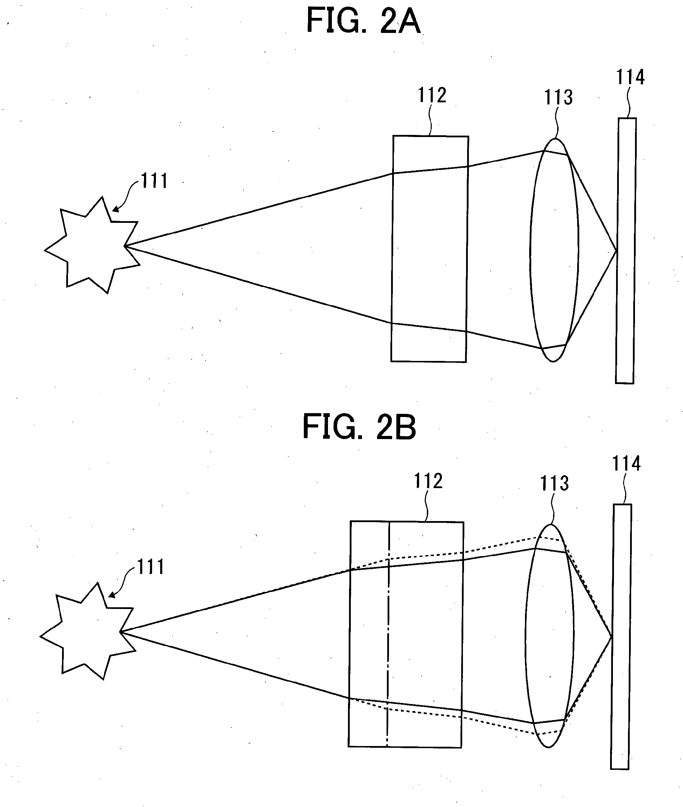

Each of FIG. 2A and 2B is a diagram that illustrates an example of an optical path of light that passes through an optical path thickness of a prism from a photographic subject, and is focused onto an image sensor by a lens.

FIG. 3 is a diagram that illustrates a structure of a stereo camera of Example 2.

FIG. 4 is a diagram that illustrates a structure of a stereo camera of Example 2.

FIG. 5 is a diagram that illustrates an example in which a stereo camera is mounted on a vehicle.

FIG. 6 is a diagram that illustrates a structure of Modified Example 1 of Example 2.

FIG. 7 is a diagram that illustrates a structure of Modified Example 2 of Example 2.

FIG. 8 is a schematic diagram that illustrates a structure of a stereo camera of Example 3.

FIG. 9 is a schematic diagram that illustrates a structure of a stereo camera of Example 4.

FIG. 10 is a schematic diagram that illustrates a state where a gap between a cross prism and a prism is maintained.

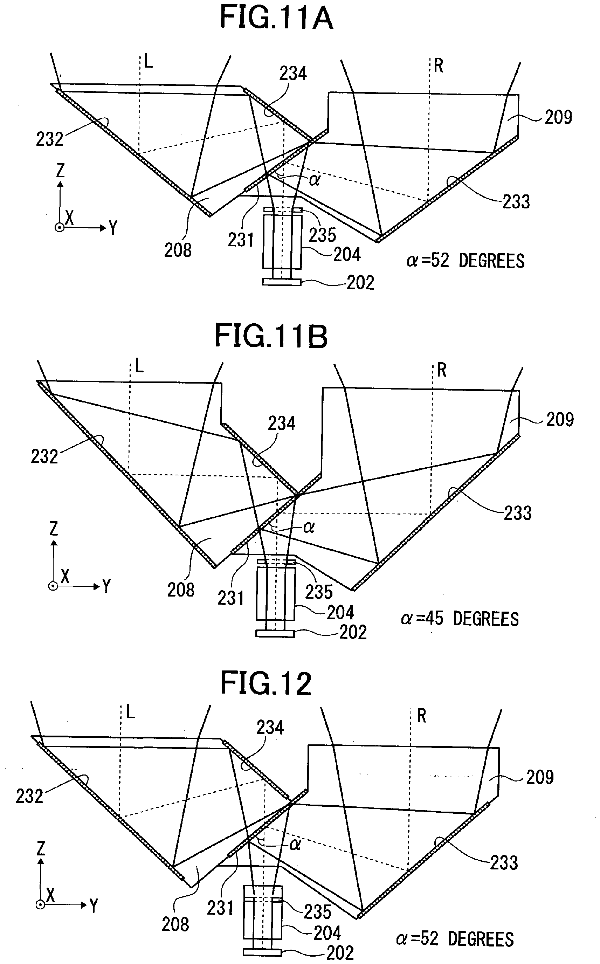

Each of FIG. 11A and 11B is a schematic diagram that illustrates a structure of a stereo camera of Example 4.

FIG. 12 is a schematic diagram in a case where an optical aperture is arranged inside an imaging lens.

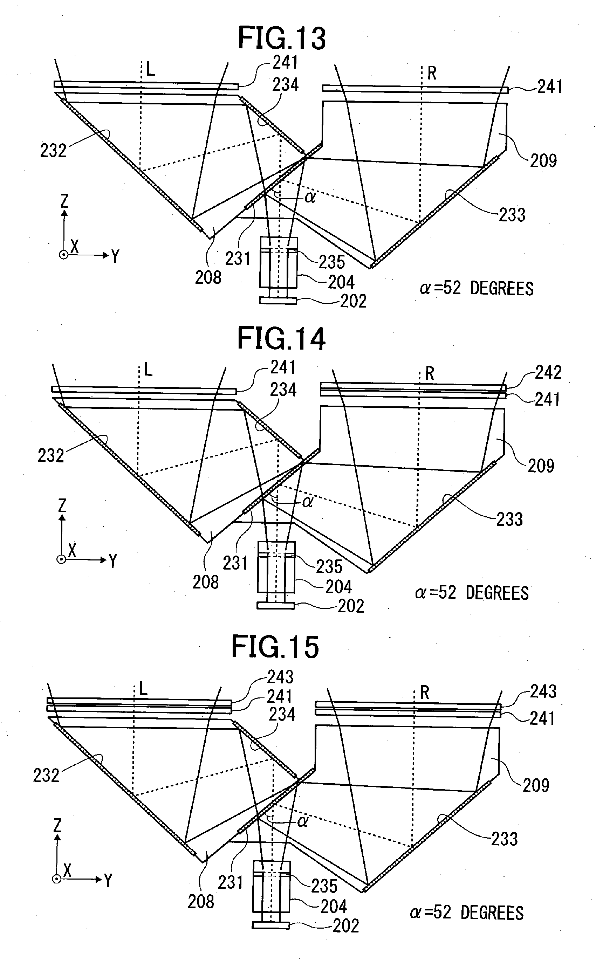

FIG. 13 is a schematic diagram that illustrates a structure of a stereo camera of Example 5.

FIG. 14 is a schematic diagram that illustrates a structure of a stereo camera of Example 6.

FIG. 15 is a schematic diagram that illustrates a structure of a stereo camera of Example 7.

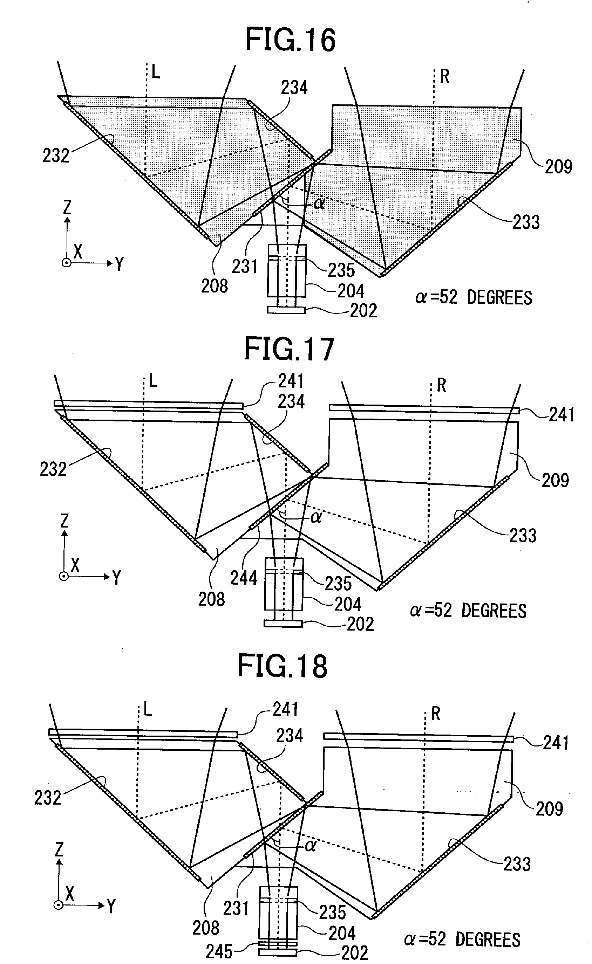

FIG. 16 is a schematic diagram that illustrates a structure of a stereo camera of Example 8.

FIG. 17 is a schematic diagram that illustrates a structure of a stereo camera of Example 9.

FIG. 18 is a schematic diagram that illustrates a structure of a stereo camera of Example 10.

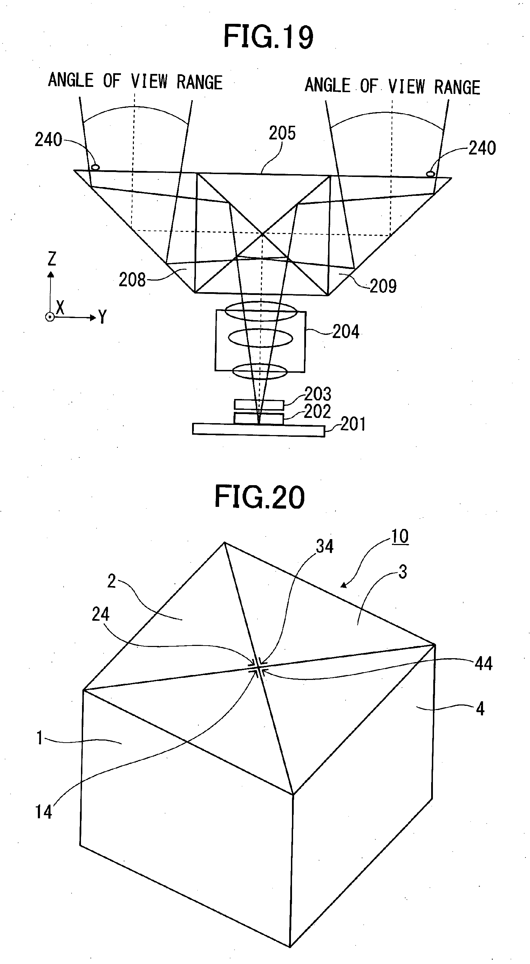

FIG. 19 is a schematic diagram that explains calibration.

FIG. 20 is a schematic perspective diagram that illustrates an example of a structure of a polarization-selection-type cross prism.

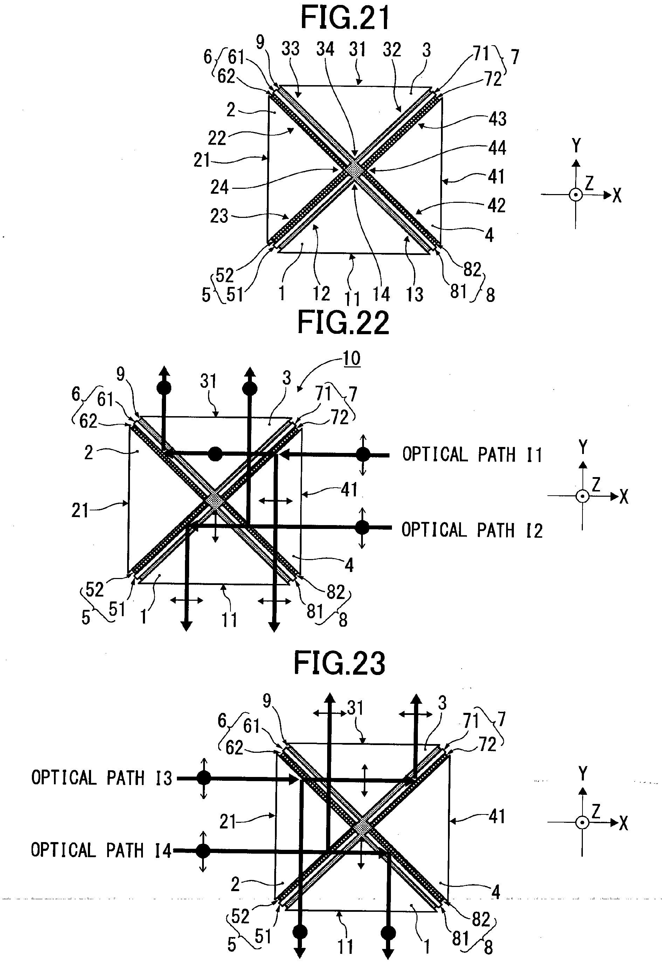

FIG. 21 is a schematic plan view that illustrates a structure of a polarization-selection-type cross prism.

FIG. 22 is a schematic plan view that illustrates a state of optical paths of light incident onto a cross prism.

FIG. 23 is a schematic plan view that illustrates a state of optical paths of light incident onto a cross prism.

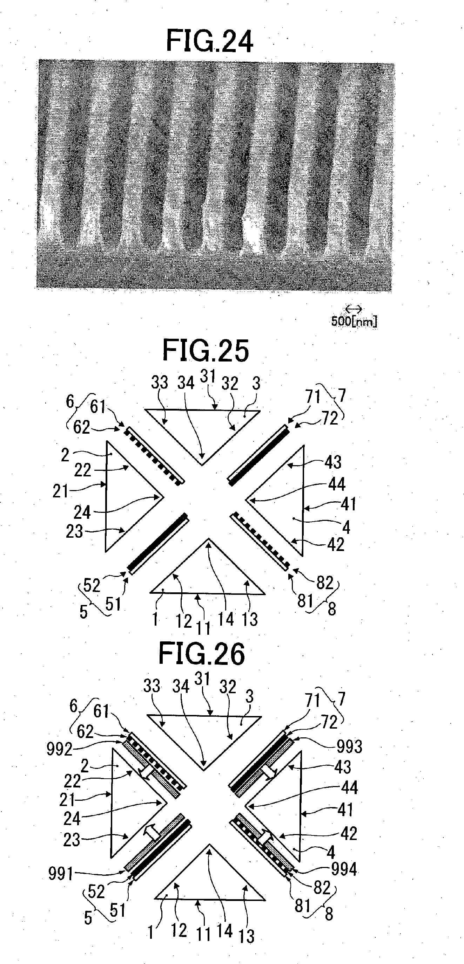

FIG. 24 is a diagram that illustrates a microscope photograph of a polarizer film formed by a wire grid structure.

FIG. 25 is a schematic process diagram that illustrates an example of a manufacturing process of a cross prism.

FIG. 26 is a schematic process diagram that illustrates an example of a manufacturing process of a cross prism.

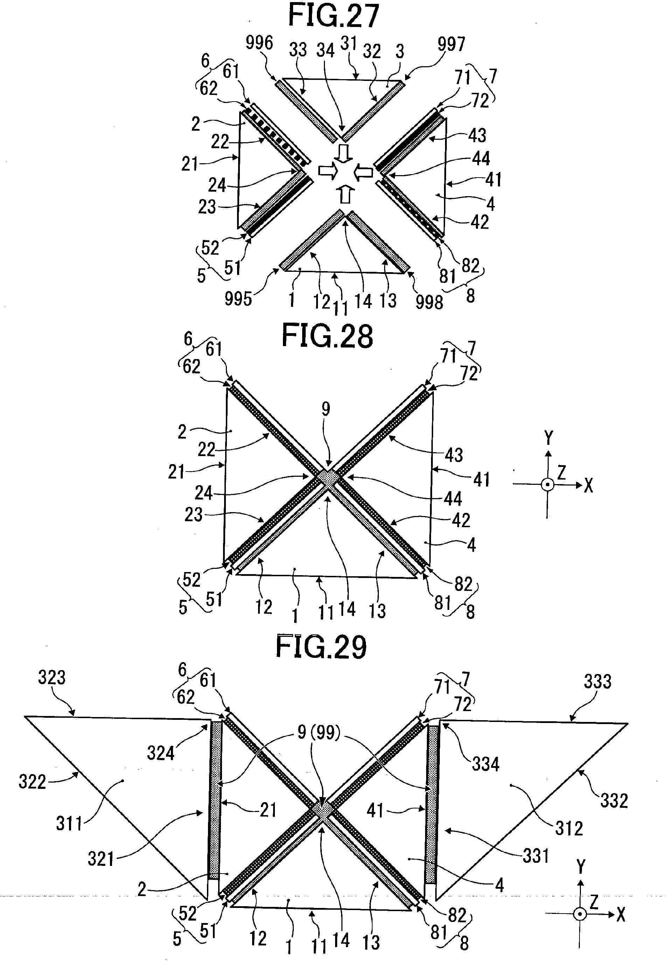

FIG. 27 is a schematic process diagram that illustrates an example of a manufacturing process of a cross prism.

FIG. 28 is a schematic plan view that illustrates a cross prism of a Modified Example 1.

FIG. 29 is a schematic plan view that illustrates a structure of a cross prism of Modified Example 2.

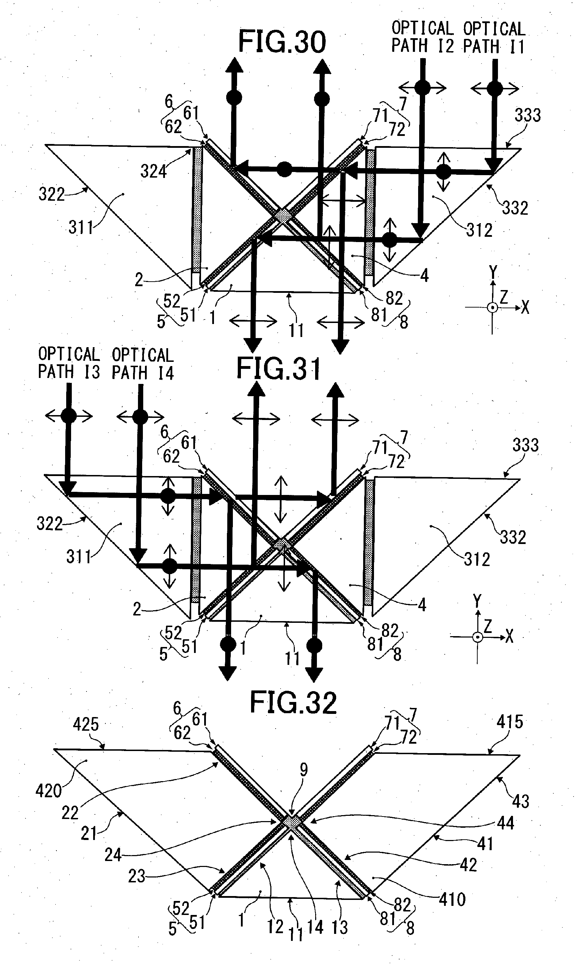

FIG. 30 is a schematic plan view that illustrates a state of optical paths of the cross prism of Modified Example 2.

FIG. 31 is a schematic plan view that illustrates a state of optical paths of the cross prism of Modified Example 2.

FIG. 32 is a schematic plan view that illustrates a structure of a cross prism of Modified Example 3.

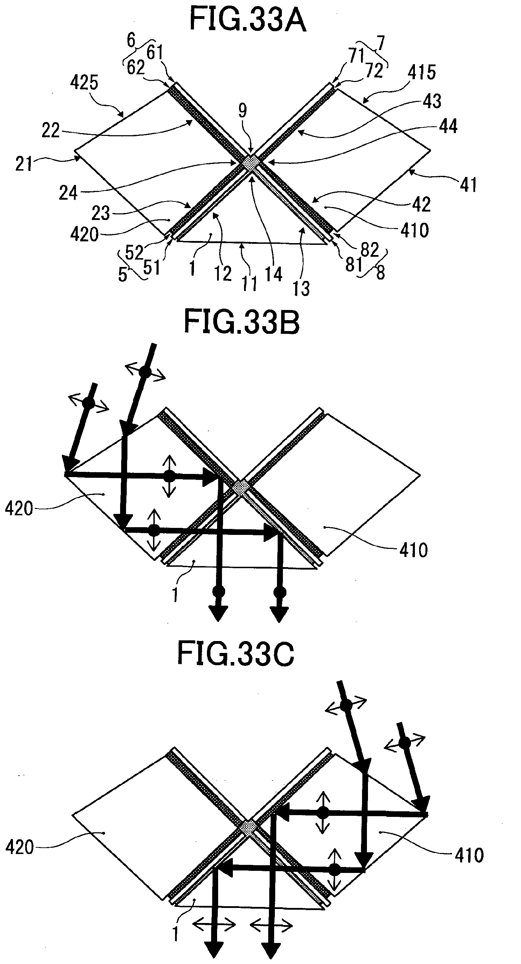

FIG. 33A is a schematic plan view that illustrates a structure of a cross prism of Modified Example 4. Each of FIGs. 33B and 33C is a schematic plan view that illustrates a state of optical paths of light incident onto the cross prism of Modified Example 4.

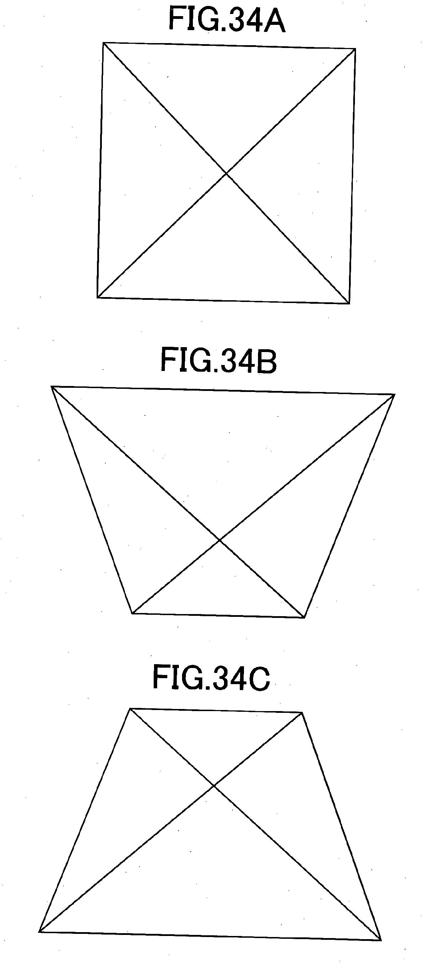

Each of FIG. 34A, 34B, and 34C is a diagram that illustrates an example of a structure of a cross prism.

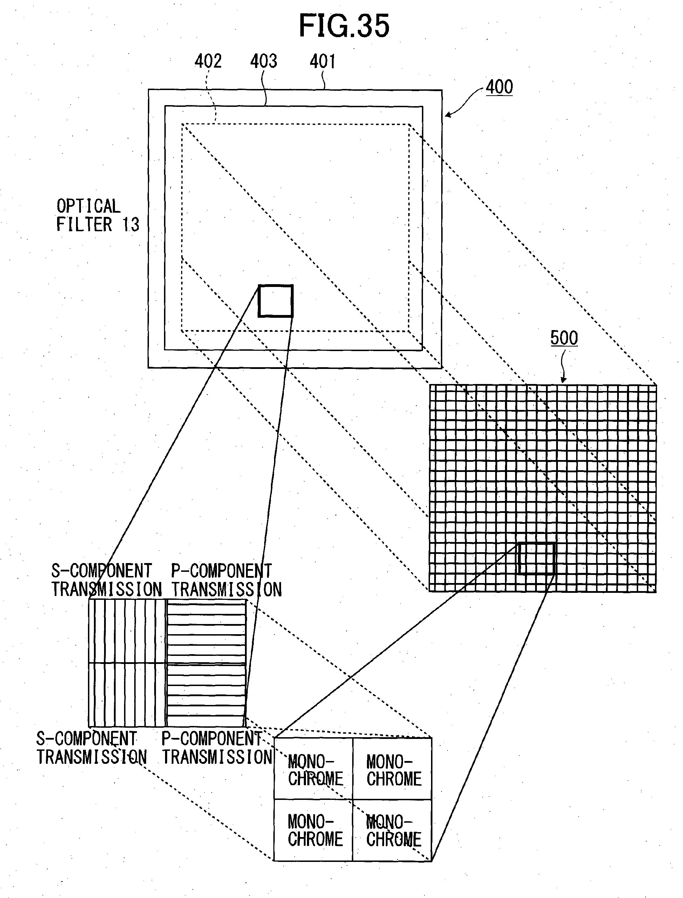

FIG. 35 is a diagram of a positional relationship between an optical filter and an image sensor.

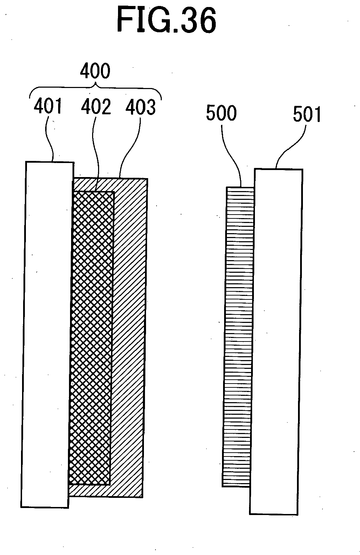

FIG. 36 is a cross-sectional diagram of the positional relationship between the optical filter and the image sensor.

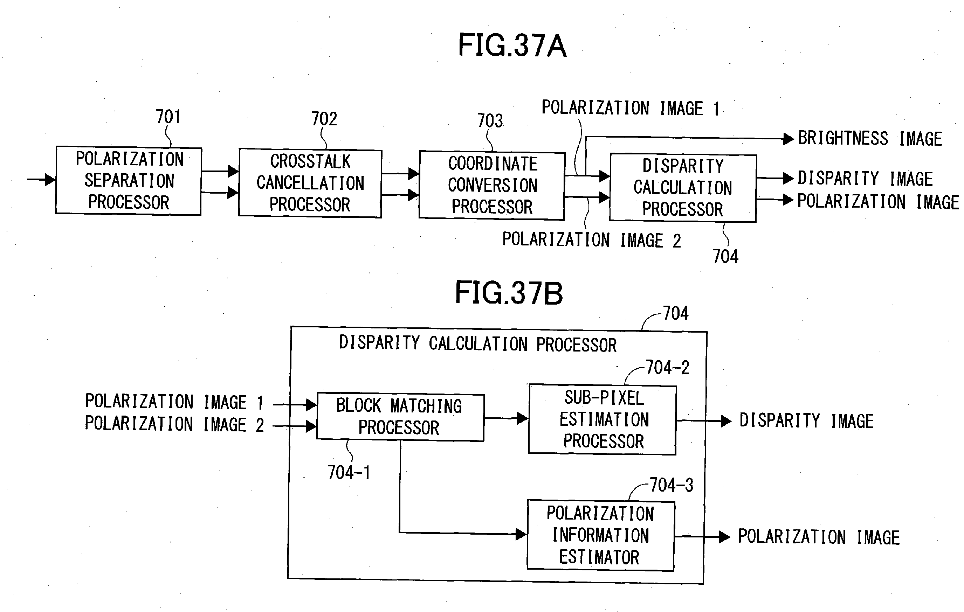

Each of FIGs. 37A and 37B is a block diagram that illustrates a structure of an image processor in a monochrome sensor.

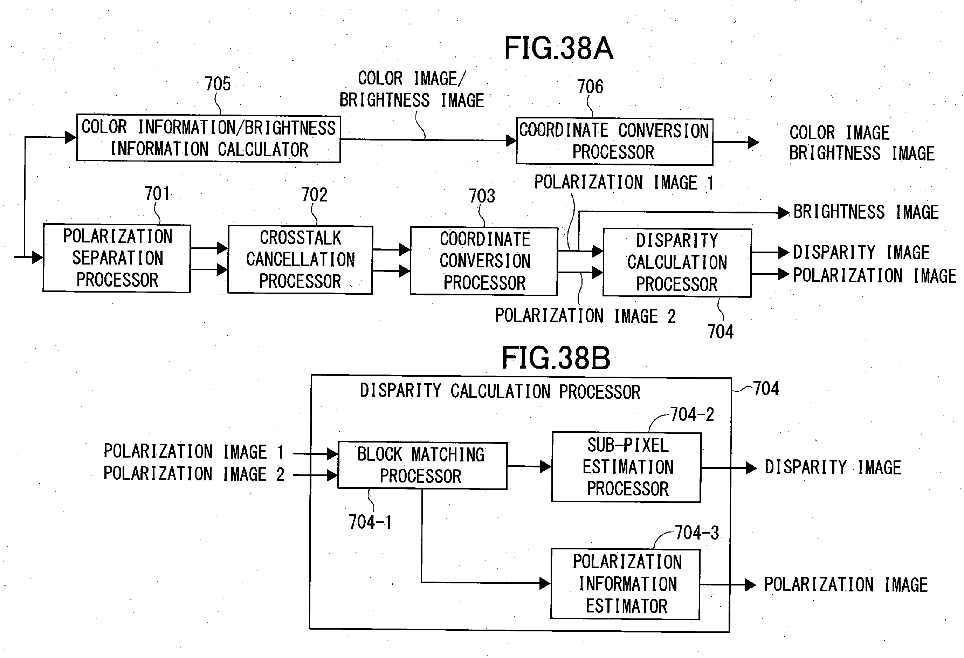

Each of FIGs. 38A and 38B is a block diagram that illustrates a structure of an image processor in an RCCC/color sensor.

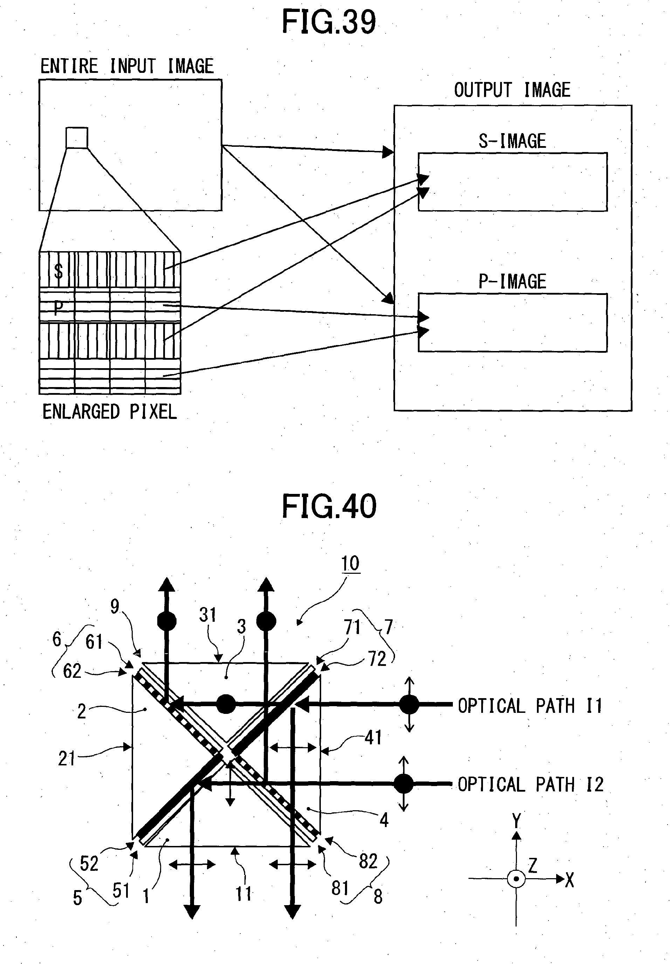

FIG. 39 is a diagram that explains polarization separation processing.

FIG. 40 is a diagram that explains gaps among prisms in a cross prism.

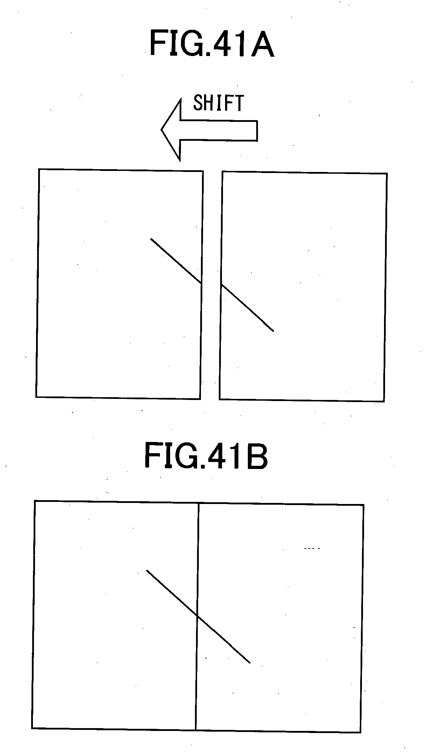

Each of FIG. 41A and 41B is a diagram that explains processing that fills a gap on an image.

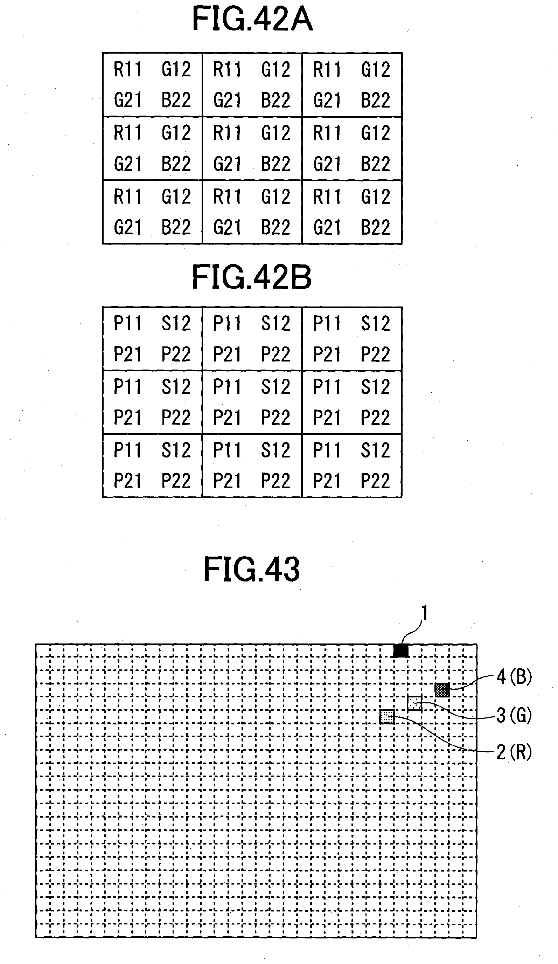

Each of FIG. 42A and 42B is a diagram that explains an arrangement of a color filter and a polarizing filter.

FIG. 43 is a diagram that explains a principle of lateral chromatic aberration correction and distortion correction.

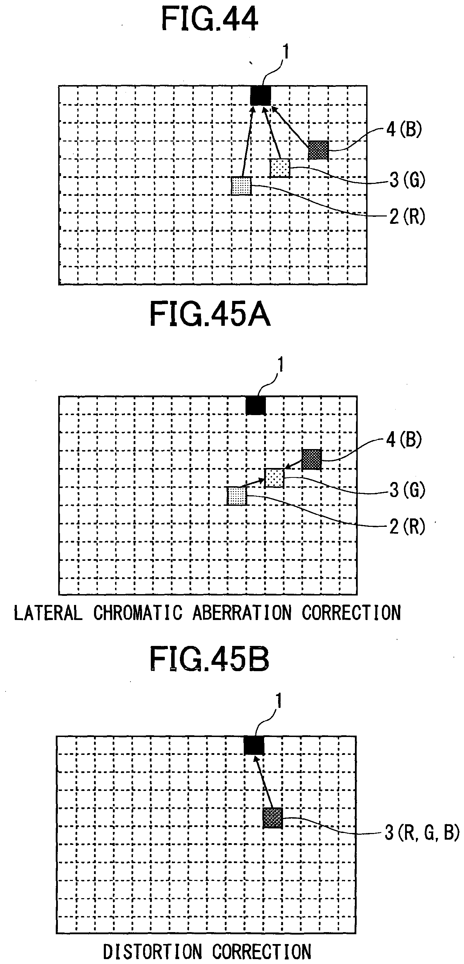

FIG. 44 is a diagram that explains a position actually imaged by an image sensor.

Each of FIG. 45A and 45B is a diagram that explains correction of lateral chromatic aberration and distortion, respectively.

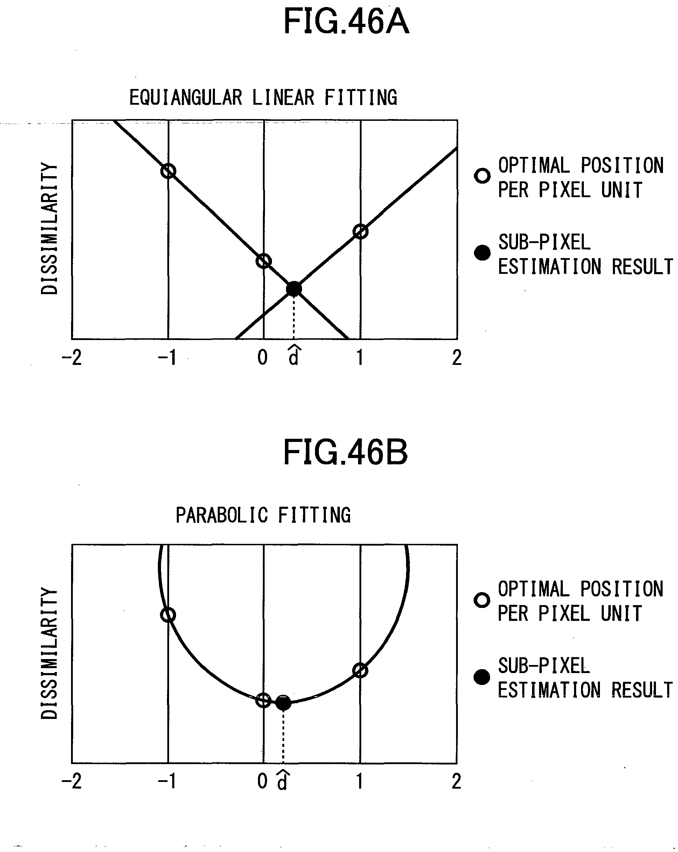

Each of FIG. 46A and 46B is a characteristic diagram that explains a relationship between a sub-pixel estimate value and a difference in equiangular linear fitting and parabolic fitting, respectively.

DESCRIPTION OF EMBODIMENTS

Hereinafter, the structure of a stereo camera according to an embodiment of the present invention will be explained.

Each of FIGs. 1A and 1B is a schematic diagram that illustrates a structure of a stereo camera of Example 1 according to an embodiment. A stereo camera 100 illustrated in each of FIGs. 1A and 1B, includes a polarization-combining module 101 as a polarization combiner, a lens 102 as an optical member, a filter 103, and an image sensor 104. The filter 103 and the image sensor 104 function as an imager. The polarization-combining module 101 includes a polarization beam splitter 101-1, a polarizing filter 101-2, and a mirror 101-3. The stereo camera 100 illustrated in each of FIGs. 1A and 1B combines two optical paths of light (light from the left and right) that form two images having disparity by use of the polarization beam splitter 101-1, and a polarizing filter 101-2, and images an image by one image sensor 104 via one lens 102. That is, the two optical paths are completely combined in front of the lens 102, and only pass through one lens. Therefore, even if a characteristic of the lens changes due to temperature, a position of the lens shifts, or a position of the sensor shifts, only both images shift likewise, and therefore, it is possible to completely cancel any influence. Thus, it is possible to achieve an extremely environmentally-resistant stereo camera. Additionally, since only one lens and one sensor are needed, it is inexpensive. Furthermore, in a case where a positional relationship between the image sensor and the lens changes, left and right images shift likewise, and therefore, it is possible to cancel any influence in principle. The filter 103 in each of FIGs. 1A and 1B is a filter that has a polarizer per pixel. However, in a structure illustrated in each of FIGs. 1A and 1B, in the optical paths of the light from the left and right, a difference in optical path length occurs. Therefore, for example, processing that compensates a difference in optical path length occurring by pixel-matching processing in disparity between two images is needed, and a structure illustrated in each of FIGs. 1A and 1B is not realistic.

Additionally, in this structure, since a distance of each of the light from the left and right from a photographic subject is different, the optical paths of the light from the left and right at the same position that pass through a lens do not correspond with each other. Therefore, due to a temperature characteristic, there is a problem in that a positional relationship between the left and right images shifts. There is no problem for such a structure in a case where it is a three-dimensional shooting/display system for being viewed by human eyes, and it is not a purpose for distance-measuring calculation that measures a distance in which highly-accurate matching of the left and right images is needed. However, in a case of performing the distance-measuring calculation, as described above, it is necessary to approximately correspond to each of left and right pixels with an accuracy of 0.1 pixel. Accordingly, in this structure, in a case where temperature changes, or the like, an error in a measured distance becomes large.

Next, a change in an optical path from a photographic subject by an optical path thickness of a prism (polarization combining module as a polarization combiner) will be explained. An example illustrated in each of FIGs. 2A and 2B is an example in which an optical path of light passes through an optical path thickness of a prism from a photographic subject 111, and is focused by a lens 113 to form an image on an image sensor 114. As illustrated in FIG. 2A, light from the left and right from the photographic subject 111 passes through the same prism 112. And in a case where an optical path thickness of the prism 112 is as illustrated in FIG. 2A, the light from the left and right has the same optical path that passes through the lens 113, and therefore, it is possible to cancel any influence of disturbance. However, as illustrated in FIG. 2B, in a case where the optical path thickness of the prism 112 is thicker than that illustrated in FIG. 2A, an optical path of light that passes through the lens 113 shifts as illustrated in a dotted line in FIG. 2B. A solid line in FIG. 2B illustrates an optical path of light illustrated in FIG. 2A. Here, for example, in a case where a distance of each of the light from the left and right from a photographic subject 111 is different, and optical paths of the light from the left and right at the same position that pass through the lens 113 do not correspond with each other, the light from the right is in a state illustrated in FIG. 2A, and the light from the left is in a state illustrated in FIG. 2B. Accordingly, it is not possible to cancel the influence of disturbance such as temperature, or the like.

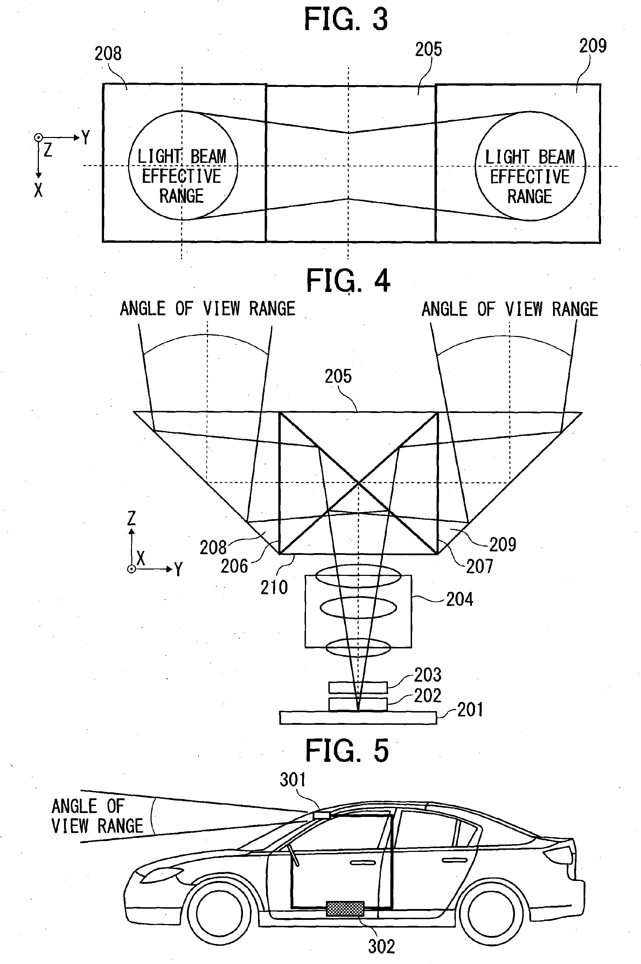

Each of FIGs. 3 and 4 is a diagram that illustrates a structure of a stereo camera of Example 2 according to the present embodiment. As illustrated in FIG. 4, in a stereo camera 200, on a substrate 201 an image sensor 202 is embedded, and an optical filter 203 is arranged on the image sensor 202 in a close-contact manner. Information of a photographic subject is obtained via an imaging lens 204. In front of the imaging lens 204, a polarization-selection-type cross prism 205 is arranged. Additionally, two triangular prisms 208, 209 are adjacently provided left and right on side surfaces 206, 207 of the polarization-selection-type cross prism 205, respectively.

In the stereo camera 200, as the optical filter 203, a region-division-type polarizing filter that extracts P-polarization information and S-polarization information in units of pixels is included. In front of the imaging lens 204, the polarization-selection-type cross prism 205 is arranged, and two prisms 208, 209 are arranged adjacent to the cross prism 205. The prisms 208, 209 have a total reflection surface that polarizes and reflects light from a + (positive) Z direction in a Y-axis direction. The polarization-selection-type cross prism 205 polarizes and reflects light of an S-polarized component that is incident onto the side surface 206 from a - (negative) Y direction, and light of a P-polarized component that is incident onto the side surface 207 from a + (positive) Y direction in a direction of a side surface 210. Thus, it is possible to extract S-polarized light in the - (negative) Y direction, and P-polarized light in the + (positive) Y direction.

The stereo camera 200 illustrated in each of FIG. 3 and 4 is different from the stereo camera 100 illustrated in FIG. 1, and is capable of obtaining P-polarized light and S-polarized light in the + (positive) Z direction at the same time. Additionally, as is clear from FIG. 4, since there is a certain distance between light beam effective ranges of the prisms provided left and right 208, 209, it is possible to form a disparity image from images formed by the P-polarized light and the S-polarized light in which the optical paths are corresponded to each other. Thus, a stereo camera according to the present embodiment is structured as a stereo camera that is capable of obtaining distance information to a photographic subject. Compared to a conventional stereo camera in which two sets of a single image sensor and a single lens are arranged in parallel, only a set of an imaging lens and an image sensor are needed, and therefore, it is possible to reduce the cost. Additionally, in a conventional stereo camera, an error in distance measurement due to a change in a base line length caused by thermal expansion of a housing that supports a gap between lenses, or the like occurs. However, in the present stereo camera, one imaging lens is included, and a prism itself corresponding to a supporting member itself has a small coefficient of thermal expansion with respect to metal, and therefore, it is possible to suppress an influence on the distance measurement due to the change in the base line length.

Note that not only a structure as a prism that is filled with a medium such as glass, or the like, but also as described later, a similar structure can be made by a simple combination of mirrors and polarizing plates arranged in a cross shape. In that case, it is necessary that an angle of view of a lens not be narrowed, and each mirror receive light at the same angle as that in a case of the prism. Thus, the polarization combining module as the polarization combiner becomes extremely large. Therefore, regarding miniaturization, it is important to use a structure that is filled with a medium having a high refractive index from a mirror surface close to a photographic subject at a particularly long distance to a next mirror surface.

The stereo camera according to the present embodiment can be used for confirming a region in front of a vehicle as illustrated in FIG. 5, for example. A device for confirming a region in front of a vehicle includes a stereo camera 301 that is placed around a rear mirror inside a front window of the vehicle, and a signal processor 302 that issues a warning to a driver or performs control of the vehicle based on information from the stereo camera 301. As a method of issuing a warning to a driver, by use of a speaker, obstacle information is informed by sound, or the like. As the control of the vehicle, in a case where there is an obstacle, the speed of the vehicle is reduced. By use of the stereo camera of the present embodiment, it is possible to obtain not only image information in front of the vehicle, but also distance information to a vehicle in front or a pedestrian, and in a case where there is an obstacle, an early warning, or the like is performed to a driver, and it is possible to secure a safe drive.

Note that in a case where the stereo camera according to the present embodiment is placed in a vehicle, a photographic subject in the outside of the vehicle is photographed through a glass of a front window. In that case, distortion, uneven thickness, curvature, and the like of the front window are different from corresponding portions in the left and right, and there is a case where matching of an image formed by light from the left and right is not performed properly. In order to cancel the above, it is preferable to place only an image sensor and a lens portion in the vehicle, and place a cross prism in the outside of the glass. Thus, the light from the left and right passes through the same portion of the front window, and an influence of the front window is received in the same way, and therefore, it is possible to always perform matching of the image formed by the light from the left and right regardless of conditions of the front window.

Additionally, the stereo camera according to the present embodiment is combined with a display device such as a TV, a movie projector, or the like that shows a three-dimensional image to human eyes by displaying different images with respect to left and right human eyes. As a result, it is possible to structure a three-dimensional image acquisition and display system that performs three-dimensional image acquisition and display. Human eyes are sensitive to a difference of rotation, the size, a shift in the vertical direction, a picture quality, or the like between left and right images. Therefore, in a conventional stereo camera having two lenses, in a case of changing zooming or focusing, a complicated operation technique is needed to operate left and right lenses together and not to allow shifts in optical axes, the size of images, and focuses between them to occur. On the other hand, in a structure according to the embodiment of the present invention, light that forms two images having disparity is incident onto a single lens, and therefore, if zooming or focusing of a single lens is changed, the same change is entirely reflected in an image viewed by the left and right human eyes. Therefore, it is possible to suppress the shifts in the optical axes, the sizes of the images, and the focuses occurring by having two different optical characteristics in the left and right, and obtain a natural stereoscopic image. In a case where zooming, or the like in the optical system is changeable, the structure according to the embodiment of the present invention is significantly useful, because accurate correction of characteristics of two lenses is extremely difficult.

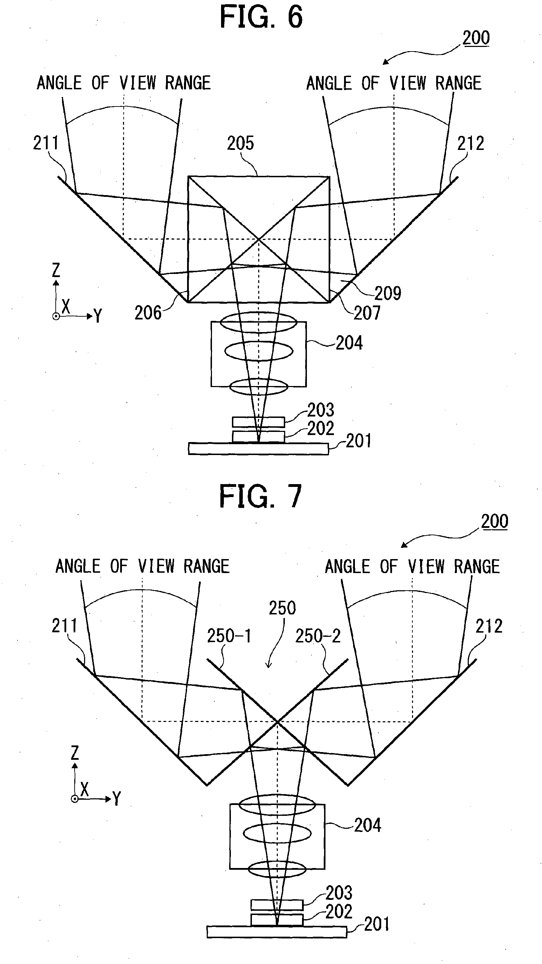

Additionally, since a phenomenon in which an angle of incident light is shallowed by a refractive index of a prism is not used, an optical layout becomes slightly larger; however, a structure of Modified Example 1 of Example 2 illustrated in FIG. 6 in which the prisms 208, 209 in the structure illustrated in FIG. 4 are changed to mirrors 211, 212 can be applied. In Modified Example 2 of Example 2 illustrated in FIG. 7, as the cross prism 205 arranged in the center, not only a prism-shaped prism, but also a combination of polarizing plates 250-1, 250-2 arranged in a cross shape (polarization-selection-type cross plate 250 in FIG. 7) can be used. In that case, likewise a phenomenon in which an angle of incident light is shallowed by a refractive index of a prism is not used, and therefore, an optical layout becomes slightly larger; however, since an amount of glass materials used is small, it is possible to reduce the cost. A structure in which prisms are arranged in the left and right, and a polarization-selection-type cross plate is arranged in a central portion can be used.

Next, a stereo camera of Example 3 will be explained.

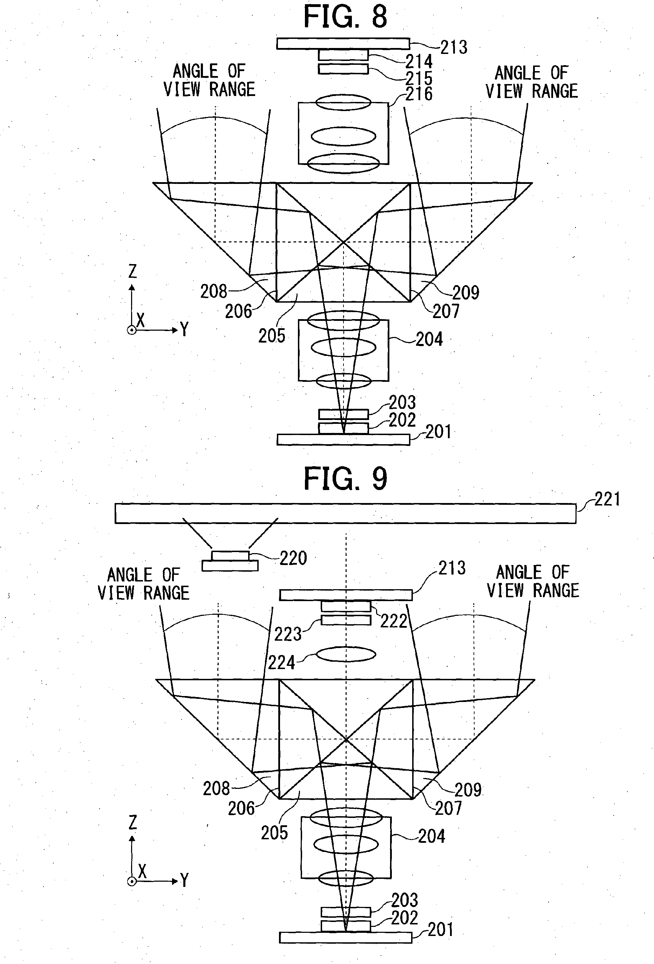

FIG. 8 is a schematic diagram that illustrates a structure of a stereo camera of Example 3. A stereo camera 200 illustrated in FIG. 8 has sensor units above and below a polarization-selection-type cross prism 205. For example, an image sensor 214 is a color image sensor, and an image sensor 202 is a monochrome image sensor. Or, the image sensor 214 is a high-resolution monochrome image sensor, and the image sensor 202 is a low-resolution color image sensor. Suppose that spatial resolution of color information that is higher than that of brightness information, and distance information is not needed generally, a set of a high-sensitivity and high-resolution monochrome image sensor that secures high distance-measuring performance and a low-resolution color image sensor in which sensitivity is lower than in that of the monochrome image sensor is used. Thus, it is possible to obtain high distance-measuring performance from a bright scene to a dark scene, and color information at the same time. Additionally, in this case, optical axes are corresponded in the left and right, and therefore, it is easy to perform calibration.

Next, a stereo camera of Example 4 will be explained.

FIG. 9 is a schematic diagram that illustrates a structure of a stereo camera of Example 4. A stereo camera 200 illustrated in FIG. 9 has a raindrop detection function. A light source 220 of an LED infrared light is projected onto a windshield 221, and via a filter 223 that passes through only light of wavelength of the projected light added onto an upper surface of a sensor, a raindrop attached on the windshield 221 is detected by looking at the reflected light thereof. Since an entire windshield is used as a detection area, it is possible to perform high-sensitivity raindrop detection. In order to improve accuracy, it is important that a detection area be large; however, by using an upper portion of FIG. 9, it is possible to perform detection on an entire image plane without interfering with the stereo camera. Additionally, in order to perform detection, only a sum of light amounts of the reflected light in the entire image plane is needed, and therefore, it is not always necessary to use an image sensor for detection, and resolution of a lens for raindrop detection is not needed. Accordingly, there is no problem with a structure using one PD (Photo Detector) 222, a simple lens (for example, a single lens) 224, and the like.

Here, fixation of a stereo camera will be explained.

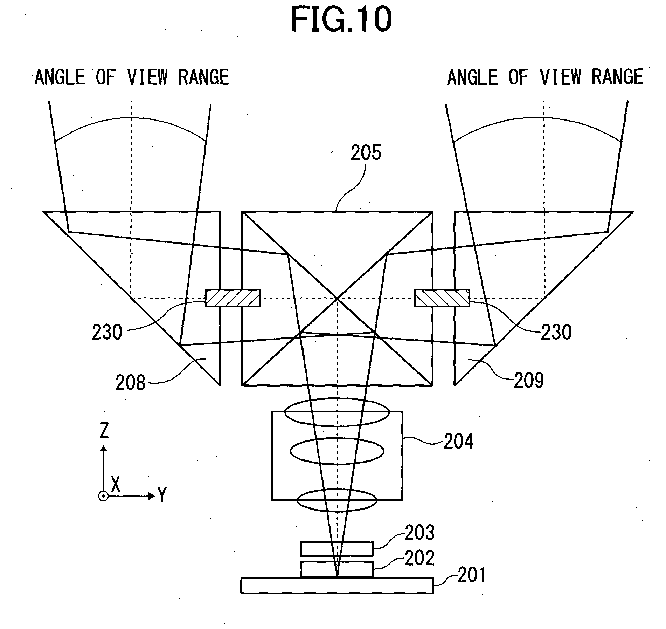

Gaps between the cross prism 205 and each of the prisms 208, 209 can be fixed with an adhesive agent. In order to correspond light beams of the left and right, in a case where it is necessary to adjust angles of the prisms, there is a case where there is a slight gap between the cross prism 205 and each of the prisms 208, 209. In that case, as illustrated in FIG. 10, it is preferable to fix the cross prism 205 and each of the prisms 208, 209 with a holding member 230 that holds the gap between the cross prism 205 and each of the prisms 208, 209. In a case where the holding member 230 is metal, a coefficient of thermal expansion of the metal is extremely large compared to glass that mainly composes the prisms 208, 209. Therefore, it is preferable that the holding member 230 be as short as possible to fill the gap as illustrated in FIG. 10. Additionally, if possible, likewise if the holding member 230 is made of glass of a small coefficient of thermal expansion, environment resistance against a temperature characteristic can be improved.

Next, a stereo camera of Example 5 will be explained.

Each of FIGs. 11A and 11B is a schematic diagram that illustrates a structure of a stereo camera of Example 5. In Example 5, instead of using the polarization-selection-type cross prism or the polarization-selection-type polarizing plate used in Examples 1 to 4, a PBS (Polarizing Beam Splitter) film and mirror surfaces (reflecting surfaces) are used. This is a structure that makes it possible to solve a problem in that the difference in optical path length occurs in the optical paths of the light from the left and right in Example 1. In the structure in Example 5, optical path lengths of light from the left and right (left light referred to as light L, and right light referred to as light R) are approximately the same. Therefore, as well as an ordinary stereo camera, it is possible to obtain disparity by only searching pixels in a lateral direction in a case of disparity calculation. Additionally, this structure is different from a structure using a cross prism, and since one PBS and mirrors are used, a deficiency portion (gap) in the center of the image plane does not exist, and an operation that fills the gap later-described is not needed. The light R (one light) is reflected by a mirror surface (reflecting surface) 233, and further, P-polarized light of the light R is reflected by a polarizing beam splitter film 231. The light L (the other light) is reflected by each of mirror surfaces 232, 234, and S-polarized light of the light L is transmitted through the polarizing beam splitter film 231. The P-polarized light and the S-polarized light are combined, and incident onto the imaging lens 204, and imaged as an image on an image sensor 202. The light L and the light R have the same difference in optical path length to each other. Here, as the polarizing beam splitter film 231, that using a multi-layer film, or a wire grid polarizer can be used; however, it is preferable to use a wire grid polarizer having stable performance with respect to incident angles and incident wavelengths in a wide range.

Additionally, in Example 5, in order to make an optical system smaller, an angle $\alpha$ between a light beam in the center of an angle of view and a polarizing beam splitter film and a mirror surface is set to larger than 45 degrees. FIG. 11A illustrates a case where an angle $\alpha$ between the light beam in the center of the angle of view and a mirror surface onto which light is reflected by or transmitted through the polarizing splitter film is set to 52 degrees. Likewise, FIG. 11B illustrates a case where the angle $\alpha$ is set to 45 degrees. In the case where the angle $\alpha$ is set to 45 degrees in FIG. 11B, compared to the case where the angle $\alpha$ is set to 52 degrees in FIG. 11A, a light beam at an end of an angle of view spreads widely in the horizontal direction in the drawing. In order to cover the light beam that spreads widely in the horizontal direction, the size of prisms becomes larger. That is, by setting the angle $\alpha$ between the light beam in the center of the angle of view and the polarizing beam splitter film and the mirror surface to be larger than 45 degrees, it is possible to make the size of the prisms smaller. An upper limit value of the angle $\alpha$ is 90 degrees. However, in a case where the upper limit value of the angle $\alpha$ is 90 degrees, the size of the prisms becomes larger than that in the case where the angle $\alpha$ is 45 degrees. Therefore, an optimal value depends on an angle of view of a lens. Furthermore, as illustrated in FIG. 11A, an optical aperture 235 is placed nearer the prisms; however, in FIG. 12, an optical aperture 235 is placed inside an imaging lens 204. In placement of the optical aperture 235 in FIG. 12, with respect to the prisms, a light beam already spreads depending on the angle of view, and the size of the prisms becomes larger compared to the prisms in a case of placement of an optical aperture 235 in FIG. 11A. It is preferable that a position of an optical aperture of an imaging lens be a position of a front aperture that is positioned in front nearer the prisms than the imaging lens.

In addition, the polarizing beam splitter film 231 also slightly reflects S-polarized light even in the mode of reflecting P-polarized light, and therefore, the polarizing beam splitter film 231 does not always operate perfectly. Accordingly, there is a case where crosstalk occurs in the light from the left and right. In that case, as illustrated in FIG. 13, it is possible to reduce the crosstalk by providing polarizers 241, 241, directions of polarization of which are perpendicular to each other in the optical paths from a photographic subject to the polarizing beam splitter film 231 in the left and right, respectively.

Additionally, in the above structure, polarization is different in light from the left and right, and therefore, in a case where there is a polarization characteristic in light from the photographic subject, in addition to disparity, even a difference in the polarization characteristic is obtained as a difference in the light from the left and right. This is advantageous to obtain even the polarization characteristic of the light from the photographic subject; however, regarding disparity calculation that measures a distance, this may cause an error. Therefore, by applying the following structures, it is possible to obtain light polarized in the same direction from the photographic subject in the left and right, and improve distance-measuring accuracy.

FIG. 14 is a schematic diagram that illustrates a structure of a stereo camera of Example 6. In FIG. 14, between the photographic subject and a polarizing beam splitter film 231, one half-wave plate 242 is provided at an angle in which a direction of polarization of one light from the photographic subject and a direction of polarization of the other light from the photographic subject are corresponded with each other. Therefore, it is possible to obtain light polarized in the same direction as the light from the left and right. Note that in FIG. 14, the polarizers 241, 241 are only provided to reduce crosstalk, which can be omitted.

FIG. 15 is a schematic diagram that illustrates a structure of a stereo camera of Example 7. In the structure having the half-wave plate 242 as illustrated in FIG. 14, light polarized in a certain direction from a photographic subject is imaged; however, in place of the half-wave plate 242, between the photographic subject and a polarizing beam splitter film 231, two quarter-wave plates 243, 243 are provided in the left and right, respectively. Thus, circular polarized light is imaged in the left and right, and light that does not depend on the polarization direction is imaged. Note that in FIG. 15, the polarizers 241, 241 are only provided to reduce crosstalk, which can be omitted.

FIG. 16 is a schematic diagram that illustrates structure of a stereo camera of Example 8. In FIG. 16, a material of a part (hatched part) of the prisms 208, 209 is replaced with a material such as polycarbonate, or the like in which a photoelastic coefficient is large and birefringence occurs randomly. This makes it possible to randomly polarize incident light, and image light that does not depend on the polarization direction in the left and right.

Note that the above structures in Examples 6 to 8 are not limited to the structure in Example 5, and even in the structures of other Examples, it is possible to use a half-wave plate, a quarter-wave plate, or a material in which a photoelastic coefficient is large and birefringence occurs randomly.

FIG. 17 is a schematic diagram that illustrates a structure of a stereo camera of Example 9. In FIG. 17, a difference from Example 5 is that in place of the polarizing beam splitter film 231, a half-silvered mirror 244 is used, and polarizers 241, 241, directions of polarization of which are perpendicular to each other in the optical paths from a photographic subject to the half-silvered mirror 244 are provided in the left and right, respectively. In the structure of Example 9, an amount of light received by an image sensor is reduced by half compared to that in Examples 1 to 8; however, no expensive polarizing beam splitter film is needed, and therefore, it is possible to structure it inexpensively.

FIG. 18 is a schematic diagram that illustrates a structure of a stereo camera of Example 10. A polarizing beam splitter film tends to deteriorate a characteristic in a long-wavelength range of light. Therefore, in Example 10, in addition to the structure of Example 9, between an image sensor and an imaging lens, an infrared cut filter 245 is provided, and it is possible to reduce crosstalk occurring between light R and light L. Note that a placement position of the infrared cut filter 245 is not limited to the position illustrated in FIG. 18, and the infrared cut filter can be placed between a photographic subject and an image sensor. Additionally, in order to adjust a transmitted light amount of the light R and light L along with a polarizing beam splitter film, a neutral density filter can be provided in either of optical paths of the light R and light L.

Next, an example that corresponds positions of light from the left and right using an alignment mark will be explained.

In this structure, as a marker used by corresponding light beams incident onto a lens, as illustrated in FIG. 19, on a cross prism 205, or prisms 208, 209 in optical paths, it is preferable to provide some sort of alignment marker 240. The alignment marker 240 can be some sort of seal, or can be colored; however, forming an image on a sensor is preferable, and therefore, it is preferable to be a marker having curvature. By using such an alignment marker 240, it is easily possible to perform calibration at the time of production, and in addition, it is possible to perform detection in a case where a positional relationship in the left and right is shifted due to some sort of change in environment, or shock while using, and prevent a serious accident such as mistakenly putting on a brake, or the like.

Next, a structure of a polarization-selection-type cross prism used in a stereo camera according to the present embodiment will be explained.

FIG. 20 is a schematic perspective diagram that illustrates an example of a structure of a polarization-selection-type cross prism. FIG. 21 is a schematic plan view that illustrates a structure of a polarization-selection-type cross prism. As illustrated in 20, a cross prism 10 is a prism in which apex angles 14, 24, 34, 44 of triangular prisms 1, 2, 3, 4 are placed to be confronted with each other, and the facing triangular prisms 1, 2, 3, 4 are adhered to each other, and fixed. Among the facing triangular prisms 1, 2, 3, 4, the above-described wire grid polarizing plates are sandwiched, respectively. The triangular prisms are thus provided, and therefore, it is possible to reduce plate aberration of a polarizing plate.

As illustrated in FIG. 21, a planar shape of the cross prism 10 is an approximately square. The cross prism 1 includes four triangular prisms 1, 2, 3, 4, which are approximately isosceles right triangular prisms and made of glass, or the like, four wire grid polarizing plates 5, 6, 7, 8, and an adhesive layer 9. In gaps formed by facing the four triangular prisms 1, 2, 3, 4 to each other and separating from each other, the adhesive layer 9 of an adhesive agent and the polarizing plates 5, 6, 7, 8 are formed, respectively.

The triangular prism 1 includes three side faces 11, 12, 13, and an apex angle 14 where the side faces 12, 13 are at approximately right angles to each other, and is formed in an approximately isosceles right triangular prism. The triangular prism 2 includes three side faces 21, 22, 23, and an apex angle 24 where the side faces 22, 23 are at approximately right angles to each other, and is formed in an approximately isosceles right triangular prism. The triangular prism 3 includes three side faces 31, 32, 33, and an apex angle 34 where the side faces 32, 33 are at approximately right angles to each other, and is formed in an approximately isosceles right triangular prism. The triangular prism 4 includes three side faces 41, 42, 43, and an apex angle 44 where the side faces 42, 43 are at approximately right angles to each other, and is formed in an approximately isosceles right triangular prism. The triangular prisms 1, 2, 3, 4 are placed such that the apex angles 14, 24, 34, 44 are confronted with each other.

The polarizing plate 5 includes a planar substrate 51, a polarizer layer 52, and a filling layer (not illustrated). The polarizer layer 52 is formed on the planar substrate 51, and the polarizer layer 52 is covered with the filling layer. With respect to light advancing from a $\pm$ (positive or negative) X direction in the drawing, the polarizing plate 5 reflects light having a direction of polarization in a Y direction, and transmits light having a direction of polarization in a Z direction. The polarizing plate 6 includes a planar substrate 61, a polarizer layer 62, and a filling layer (not illustrated). The polarizer layer 62 is formed on the planar substrate 61, and the polarizer layer 62 is covered with the filling layer. With respect to the light advancing from the $\pm$ (positive or negative) X direction in the drawing, the polarizing plate 6 reflects the light having the direction of polarization in the Y direction, and transmits the light having the direction of polarization in the Z direction. The polarizing plate 7 includes a planar substrate 71, a polarizer layer 72, and a filling layer (not illustrated). The polarizer layer 72 is formed on the planar substrate 71, and the polarizer layer 72 is covered with the filling layer. With respect to the light advancing from the $\pm$ (positive or negative) X direction in the drawing, the polarizing plate 7 reflects the light having the direction of polarization in the Y direction, and transmits the light having the direction of polarization in the Z direction. The polarizing plate 8 includes a planar substrate 81, a polarizer layer 82, and a filling layer (not illustrated). The polarizer layer 82 is formed on the planar substrate 81, and the polarizer layer 82 is covered with the filling layer. With respect to the light advancing from the $\pm$ (positive or negative) X direction in the drawing, the polarizing plate 8 reflects the light having the direction of polarization in the Y direction, and transmits the light having the direction of polarization in the Z direction.

Additionally, the polarizing plate 5 is placed such that the polarizer layer 52 faces the side face 23 of the triangular prism 2 against the planar substrate 51. The gap between a surface of the not-illustrated filling layer and a surface of the side face 23 is bonded with an adhesive agent. The polarizing plate 6 is placed such that the polarizer layer 62 faces the side face 22 of the triangular prism 2 against the planar substrate 61. The gap between a surface of the not-illustrated filling layer and a surface of the side face 22 is bonded with an adhesive agent. The polarizing plate 7 is placed such that the polarizer layer 72 faces the side face 43 of the triangular prism 4 against the planar substrate 71. The gap between a surface of the not-illustrated filling layer and a surface of the side face 43 is bonded with an adhesive agent. The polarizing plate 8 is placed such that the polarizer layer 82 faces the side face 42 of the triangular prism 4 against the planar substrate 81. The gap between a surface of the not-illustrated filling layer and a surface of the side face 42 is bonded with an adhesive agent.

The gap between the planar substrate 51 and the side face 12 of the triangular prism 1 is bonded with an adhesive agent. The gap between the planar substrate 61 and the side face 33 of the triangular prism 3 is bonded with an adhesive agent. The gap between the planar substrate 71 and the side face 32 of the triangular prism 3 is bonded with an adhesive agent. The gap between the planar substrate 81 and the side face 13 of the triangular prism 1 is bonded with an adhesive agent.

The adhesive layer 9 is formed at the gaps where the triangular prisms 1, 2, 3, 4 and the polarizing plates 5, 6, 7, 8 are separated from each other. The adhesive layer 9 is formed such that a curing operation of the adhesive agent is performed all together, and the four triangular prisms and the four polarizing plates are bonded and fixed. As the adhesive agent, an adhesive agent that is excellent in translucency, glass-adhesiveness, and accuracy, for example, an ultraviolet curing adhesive agent, or the like is used.

Next, by use of FIGs. 22, and 23, optical paths of light incident onto a cross prism will be explained.

As illustrated in FIG. 22, optical paths I1, 12 of light incident from the side face 41 of the triangular prism 4 are divided to an optical path in a + (positive) Y direction, and an optical path in a - (negative) Y direction, respectively, in accordance with a polarization direction. In the optical path I1 of light incident onto the side face 41 of the triangular prism 4, light of a P-polarized component having a polarization direction in a Y-axis direction is reflected by the polarizer layer 72 of the polarizing plate 7, and transmitted through the polarizer layer 82 of the polarizing plate 8 and advances in the - (negative) Y direction. On the other hand, in the optical path I1 of light incident onto the side face 41 of the triangular prism 4, light of an S-polarized component having a polarization direction in a Z-axis direction is transmitted through the polarizer layer 72 of the polarizing plate 7, and reflected by the polarizer layer 62 of the polarizing plate 6 and advances in the + (positive) Y direction. In the optical path 12 of light incident onto the side face 41 of the triangular prism 4, light of an S-polarized component is reflected by the polarizer layer 82 of the polarizing plate 8, and transmitted through the polarizer layer 72 of the polarizing plate 7 and goes in the + (positive) Y direction. On the other hand, in the optical path 12 of light incident onto the side face 41 of the triangular prism 4, light of a P-polarized component is transmitted through the polarizer layer 82 of the polarizing plate 8, and reflected by the polarizer 52 of the polarizing plate 5 and advances in the - (negative) Y direction.

As illustrated in FIG. 23, optical paths 13, 14 of light incident from the side face 21 of the triangular prism 2 are divided to an optical path in a + (positive) Y direction, and an optical path in a - (negative) Y direction, respectively, in accordance with a polarization direction. In the optical path 13 of light incident onto the side face 21 of the triangular prism 2, light of an S-polarized component is reflected by the polarizer layer 62 of the polarizing plate 6, and advances in the - (negative) Y direction. On the other hand, in the optical path 13 of the light incident onto the side face 21 of the triangular prism 2, light of a P-polarized component is transmitted through the polarizer layer 62 of the polarizing plate 6, and reflected by the polarizer layer 72 of the polarizing plate 7 and advances in the + (positive) Y direction. In the optical path 14 of light incident onto the side face 21 of the triangular prism 2, light of a P-polarized component is reflected by the polarizer layer 52 of the polarizing plate 5, and transmitted through the polarizer layer 62 of the polarizing plate 6 and advances in the + (positive) Y direction. On the other hand, in the optical path 14 of the light incident onto the side face 21 of the triangular prism 2, light of an S-polarized component is transmitted through the polarizer layer 52 of the polarizing plate 5, and reflected by the polarizer 82 of the polarizing plate 8 and advances in the - (negative) Y direction.

Here, each of the polarizing plates 5, 6, 7, 8 needs to be a polarizing plate that transmits light of a polarized component having a specific polarization direction, and reflects light of a polarized component having a polarization direction perpendicular to the light of the polarized component having the specific polarization direction. In this Example, polarizing plates are used such that on the planar substrates 51, 61, 71, 81, the polarizer layers 52, 62, 72, 82 are formed, respectively. As a polarizer, a wire grid structure, or the like can be used. As a material of the planar substrates 51, 61, 71, 81 of the polarizing plates 5, 6, 7, 8, it is possible to use a transparent material that transmits light in an utilized range (for example, visible light range and infrared range), for example, glass, sapphire, crystal, or the like. In this example, it is preferable to use glass, silica glass (refractive index 1.46), or Tempax glass (refractive index 1.51), which is low in cost and resistant, in particular. Additionally, the material is not limited to glass, and plastic can be also used. It is more preferable to use film-type plastic, because it is possible to narrow gaps among prisms by using the film-type plastic.

Next, a polarizer layer will be explained. Each of the polarizer layers 52, 62, 72, 82 of the polarizing plates 5, 6, 7, 8 has a polarizer film formed by a wire grid structure, and a surface of which is a corrugated surface. The wire grid structure is a structure in which a metal wire (electric conductor line) that is made of metal such as aluminum, or the like, and extends in a specific direction is arranged at a specific pitch. When light having a direction of polarization in a groove direction is incident onto the polarizer film illustrated in FIG. 24, the light is reflected, and when light having a direction of polarization in a direction perpendicular to the groove is incident onto the polarizer film illustrated in FIG. 24, the light is transmitted. The following effects are obtained by making a pitch of a wire of the wire grid structure sufficiently smaller (for example, less than or equal to 1/2) than a wavelength range of incident light (for example, a wavelength range of visible light from 400 nm to 800 nm). That is, light of an electric field vector component that vibrates parallel to a longitudinal direction of the metal wire is mostly reflected, and light of an electric field vector component that vibrates in a direction perpendicular to the longitudinal direction of the metal wire is mostly transmitted, and therefore, it is possible to use it as a polarizer layer that generates a single-polarization layer. In a polarizer layer of a wire grid structure, generally, when a cross-sectional area of the metal wire increases, an extinction ratio increases, and additionally, when the pitch of the metal wire is equal to or more than a predetermined width, transmittance decreases. In addition, when a cross-sectional shape perpendicular to the longitudinal direction of the metal wire is in a tapered shape, wavelength dispersion of transmittance and polarization degree is small in a wide range, and a high extinction ratio characteristic is shown.

Forming a polarizer layer with a wire grid structure brings about the following effect. That is, it is possible to form the wire grid structure by using a widely-known semiconductor manufacturing process. In particular, after depositing an aluminum thin film, patterning is performed, and a sub-wavelength relief structure of a wire grid is formed by a metal etching method, or the like. Additionally, since the wire grid structure is made of a metal material such as aluminum, titanium, or the like, there also are advantages of being excellent in heat-resistance, and suitable for use in an environment prone to a high temperature. The wire grid structure is a submicron structure, and therefore, it is preferable to be protected in consideration of handling such as assembling, or the like.

In a case of close contact bonding with a separate member (prism, or the like) as in the present example, it is preferable to be placed in parallel, and it is preferable that a filler be formed as a flattened layer. The filler is filled in a concave portion between metal wires of the polarizer layer. As the filler, an inorganic material having a refractive index lower than or equal to that of the planar substrate can be suitably used. The filler is formed so as to cover an upper surface in a direction of lamination of a metal wire portion of the polarizer layer. As a material of the filler, it is necessary to use a material that flattens the corrugated surface of the polarizer layer and does not interfere with a function of the polarizer layer, and therefore, it is preferable to use a material without a polarization function. Additionally, as the material of the filler, it is preferable to use a material having a low refractive index that is extremely close to a refractive index of air (refractive index = 1). As a specific material of the filler, it is preferably a porous ceramic material that is formed such that minute pores are dispersed in ceramics, for example. In particular, porous silica ($SiO_2$), porous magnesium fluoride (MgF), porous alumina ($Al_2O_3$), or the like can be used.

Furthermore, a low refractive index degree is defined by the number, or the size of the pores in ceramics (porous degree). In a case where a main component of the planar substrate is made of crystal, or glass, porous silica (n = 1.22 to 1.26) can be suitably used. As a forming method of the filler, for example, an SOG (Spin On Glass) method can be suitably used, although it is not limited thereto. In particular, the filler is formed such that solvent in which silanol ($Si(OH)_4$) is dissolved in alcohol is spin-coated on the polarizer layer formed on the planar substrate, and then a solvent component is volatilized by heat treatment, and silanol itself performs dehydration polymerization reaction. The polarizer layer is a sub-wavelength-sized wire grid structure, and therefore, mechanical strength is weak, and metal wires may be damaged by a subtle external force. The polarizing plate in the present example is desirably placed so as to be in close-contact with a triangular prism, and therefore, there is a possibility that a polarizing plate and a triangular prism are contacted in a manufacturing process.

In the present example, since the upper surface in the direction of lamination of the polarizer layer is covered with the filler, it is possible to suppress a situation where the wire grid structure is damaged in a case of contacting with the triangular prism. Additionally, as in the present example, filling the concave portion between the metal wires in the wire grid structure of the polarizer layer with the filler makes it possible to prevent foreign matter from entering the concave portion.

Next, a manufacturing process of a polarization-selection-type cross prism will be explained. Each of FIGs. 25 to 27 is a schematic process diagram that illustrates an example of a manufacturing process of a cross prism. FIG. 25 illustrates a manufacturing process of a triangular prism. FIG. 28 illustrates a placement process of a polarizing plate. FIG. 29 illustrates a placement process of a triangular prism. As illustrated in FIG. 25, in the manufacturing process of the triangular prism, firstly, triangular prisms 1, 2, 3, 4 are manufactured. For example, an approximately isosceles right triangular prism 1 is formed such that two side faces 12, 13 of three side faces 11, 12, 13 are approximately perpendicular to each other. Likewise, triangular prisms 2, 3, 4 are manufactured. Additionally, as described above, the polarizing plates 5, 6, 7, 8 are manufactured. And, as illustrated in FIG. 26, in the placement process, for example, on surfaces on sides of the polarizer layers 52, 62, 72, 82 of the polarizing plates 5, 6, 7, 8, adhesive agents 991, 992, 993, 994 are coated, respectively, and placed. Then, the polarizing plates 5, 6 are placed on the side faces 22, 23 of the triangular prism 2, respectively, and the polarizing plates 7, 8 are placed on the side faces 42, 43 of the triangular prism 4, respectively. As each of the adhesive agents 991, 992, 993, 994, an adhesive agent that is excellent in translucency, glass-adhesiveness, and accuracy, for example, an ultraviolet curing adhesive agent, or the like is used.

Next, as illustrated in FIG. 27, in the placement process, placement of the triangular prisms 1, 2, 3, 4 is determined such that the apex angles 14, 24, 34, 44 are confronted with each other. On the side faces of the triangular prisms 1, 3, adhesive agents 995 to 998 are coated.

Next, in a curing operation process, ultraviolet irradiation is performed, for example, and a curing operation of the adhesive agents 991 to 998 is performed all together, and therefore, adhesive layers are formed under an equal curing operation condition, and the triangular prisms 1, 2, 3, 4 and the polarizing plates 5, 6, 7, 8 are bonded and fixed to each other. A cross prism in a square column shape illustrated in FIG. 20 is thus formed. Note that as the triangular prisms and the polarizing plates before bonding and curing, long ones that extend in a Z-axis direction are used, and therefore, processes of the placement, and the bonding and curing are performed only once, and then only a cutting process is needed.

Next, a cross prism of Modified Example 1 will be explained.

A cross prism is not only limited to the above structure, but also can be a structure of Modified Example 1 as illustrated in FIG. 28. A difference from the structure of the cross prism illustrated in FIGs. 20 and 21 is that the triangular prism 3 is excluded. In a case where only optical paths of the triangular prism 1 and the triangular prism 2, and optical paths of the triangular prism 1 and the triangular prism 4 are used as an optical system, and optical paths via the triangular prism 3 are not used, the triangular prism 3 can be excluded.

Next, a cross prism of Modified Example 2 will be explained.

FIG. 29 is a schematic plan view that illustrates a structure of a cross prism of Modified Example 2. The cross prism of Modified Example 2 is formed such that on the side face 21 of the triangular prism 2 of the cross prism 10 and the side face 41 of the triangular prism 4 of the cross prism 10, a triangular prism 311 and a triangular prism 312 are bonded, respectively, via an adhesive layer 9 of an adhesive agent 99. The triangular prism 311 includes side faces 321, 322, 323, and an apex angle 324 where the side faces 321, 322 are approximately perpendicular to each other, and is formed in an approximately isosceles right triangular prism. The triangular prism 312 includes side faces 331, 332, 333, and an apex angle 334 where the side faces 331, 332 are approximately perpendicular to each other, and is formed in an approximately isosceles right triangular prism.

Next, by use of FIGs. 30 and 31, optical paths of light incident onto the cross prism of Modified Example 2 will be explained.

As illustrated in FIG. 30, optical paths I1, I2 of light incident onto the side face 333 of the triangular prism 312 are divided to an optical path in a + (positive) Y direction, and an optical path in a - (negative) Y direction, respectively, in accordance with a polarization direction. In the optical path I1 of light incident onto the side face 333 of the triangular prism 312, light of a P-polarized component is reflected by a reflecting surface 332, an optical path of which is changed by 90 degrees, reflected by the polarizer layer 72 of the polarizing plate 7, and advances in the - (negative) Y direction. On the other hand, in the optical path I1 of the light incident onto the side face 333 of the triangular prism 312, light of an S-polarized component is reflected by the reflecting surface 332, an optical path of which is changed by 90 degrees, transmitted through the polarizer layer 72 of the polarizing plate 7, reflected by the polarizer layer 62 of the polarizing plate 6, and advances in the + (positive) Y direction. In the optical path 12 of light incident onto the side face 333 of the triangular prism 312, light of an S-polarized component is reflected by the reflecting surface 332, an optical path of which is changed by 90 degrees, reflected by the polarizer layer 82 of the polarizing plate 8, and advances in the + (positive) Y direction. On the other hand, in the optical path I2 of the light incident onto the side face 333 of the triangular prism 312, light of a P-polarized component is reflected by the reflecting surface 332, an optical path of which is changed by 90 degrees, transmitted through the polarizer layer 82 of the polarizing plate 8, reflected by the polarizer layer 52 of the polarizing plate 5, and advances in the - (negative) Y direction.

As illustrated in FIG. 31, optical paths 13, 14 of light incident onto the side face 323 of the triangular prism 311 are divided to an optical path in a + (positive) Y direction, and an optical path in a - (negative) Y direction, respectively, in accordance with a polarization direction. In the optical path 13 of light incident onto the side face 323 of the triangular prism 311, light of an S-polarized component is reflected by a reflecting surface 322, an optical path of which is changed by 90 degrees, reflected by the polarizer layer 62 of the polarizing plate 6 and advances in the - (negative) Y direction. On the other hand, in the optical path 13 of the light incident onto the side face 323 of the triangular prism 311, light of an S-polarized component is reflected by the reflecting surface 322, an optical path of which is changed by 90 degrees, transmitted through he polarizer layer 62 of the polarizing plate 6, and reflected by the polarizer layer 72 of the polarizing plate 7 and advances in the + (positive) Y direction. In the optical path 14 of light incident onto the side face 323 of the triangular prism 311, light of a P-polarized component is reflected by the reflecting surface 322, an optical path of which is changed by 90 degrees, reflected by the polarizer layer 52 of the polarizing plate 5, and advances in the + (positive) Y direction. On the other hand, in the optical path 14 of the light incident onto the side face 323 of the triangular prism 311, light of an S-polarized component is reflected by the reflecting surface 322, an optical path of which is changed by 90 degrees, transmitted through the polarizer layer 52 of the polarizing plate 5, and reflected by the polarizer 82 of the polarizing plate 8 and advances in the - (negative) Y direction.

Next, a cross prism of Modified Example 3 will be explained.

A cross prism is not limited to the above structures, but can be a structure of Modified Example 3 illustrated in FIG. 32.. Differences from the structure of the cross prism illustrated in FIG. 30 are that the triangular prism 312 is not bonded, and a quadrilateral prism in which a function of the triangular prism 312 is integrated into the triangular prism 4 is used, and additionally, the triangular prism 311 is not bonded, and a quadrilateral prism in which a function of the triangular prism 311 is integrated into the triangular prism 2 is used. A side face 415 of a quadrilateral prism 410, and a side face 425 of a quadrilateral prism 420 are formed so as to be parallel to a side face 11 of a triangular prism 1. Thus, it is possible to omit a bonding process and suppress a shift due to bonding, and therefore, it is possible to suppress a change as an optical path. As a result, it is possible to achieve cost reduction.

Next, a cross prism of Modified Example 4 will be explained.

A cross prism is not limited to the above structures, but can be a structure of Modified Example 4 illustrated in FIG. 33A. A difference from the structure of the cross prism illustrated in FIG. 25 is that a side face 415 of a quadrilateral prism 410 and a side face 425 of a quadrilateral prism 420 are not parallel to a side face 11 of a triangular prism 1. With such a structure, it is possible to cope with various angles of optical paths of light incident onto the side face 415 and the side face 425. In each of FIGs. 33B and 33C, optical paths of light incident onto the cross prism of Modified Example 4 are illustrated.

Here, a structure of a cross prism is not limited to a structure of a square (FIG. 34A), but can be a trapezoidal shape as illustrated in FIGs. 34B, or 34C. With such a structure, it is not limited to a prism that polarizes an optical path in the perpendicular direction, and it is possible to form cross prisms for various polarization angles.

Next, a SWS (Sub-Wavelength Structure) filter for polarization separation will be explained.

FIG. 35 is a diagram that illustrates the correspondence of a positional relationship between an optical filter and an image sensor. FIG. 36 is a cross-sectional diagram of FIG. 35. In an optical filter 400, a filter substrate 401 is a transparent substrate that transmits incident light that is incident onto a polarization filter layer 402 via an imaging lens. On a surface on a side of an image sensor 500 of the filter substrate 401, a polarization filter layer 402 is formed. Additionally, a filling layer 403 is formed so as to cover the polarization filter layer 402. Light transmitted through the polarization filter layer 402 of light incident onto the optical filter 400 is incident onto a pixel region of the image sensor 500. In the polarization filter layer 402, each polarizer corresponding to the size of each pixel of the image sensor 500 is region-divisionally formed. A P-polarized component transmission region and an S-polarized component transmission region are formed as polarizers. In FIG. 36, the S-polarized component transmission region and the P-polarized component transmission region can be strip patterns. Here, as an image sensor, a monochrome sensor is envisaged; however, it can be a color sensor. In a region where the polarization filter layer 402 is formed, images of each of the P-polarized component region and the S-polarized component region are captured by the image sensor 500, and, those are used for various information detection as a disparity image by forming a difference image as described later.

Next, an image processor as a distance-measuring device will be explained.

Each of FIGs. 37A and 37B is a block diagram that illustrates a structure of an image processor as a distance-measuring device in a monochrome sensor. FIG. 37A illustrates an entire structure, and FIG. 37B illustrates a structure of a disparity calculation processor. Each of FIGs. 38A and 38B is a block diagram that illustrates a structure of an image processor as a distance-measuring device in a RCCC (Red/Clear)/color sensor. FIG. 38A illustrates an entire structure, and FIG. 38B illustrates a structure of a disparity calculation processor. In FIG. 37A, an image from an image sensor is inputted to a polarization separation processor 701, and divided into a polarization image 1 and a polarization image 2 by the polarization separation processor 701. As illustrated in FIG. 39, in the polarization separation processor 701, from an entire input image per pixel unit, a pixel of the S-polarized component is extracted, and an S-image is formed. This is the polarization image 1. On the other hand, from the entire input image a pixel of the P-polarized component is extracted, and a P-image is formed. This is the polarization image 2.

Note that in a case where disparity calculation is actually performed with respect to the image that is outputted as it is, corresponding positions in an S-polarized image and a P-polarized image are shifted by 1 pixel in the vertical direction, and therefore, there is a case where an error occurs on an edge, or the like. Therefore, in the polarization separation processor 701, by interpolating a pixel in between, it is preferable to output an image having corresponding S-pixels and P-pixels with respect to entire pixels. For example, in FIG. 39, in a case where there is a portion where an S-pixel corresponding to a P-pixel is defective, there is a method such that as a value of the S-pixel in that portion, (S1 + S2)/2 is allocated. Likewise, with respect to a P-pixel, it is possible to perform interpolation by using corresponding P-pixels above and below. As a result, it is possible to output an image having corresponding S-pixels and P-pixels, as an output image, with respect to the entire pixels.

Here, there is a case where gaps among prisms in a cross prism illustrated in FIG. 40 cause an area in which an image is not shown in the vicinity of the center of an image plane. Therefore, processing that fills the gaps is needed. As illustrated in FIG. 41A, an image on the right in the drawing is shifted to the left, and as illustrated in FIG. 41B, the gap is filled. Due to an individual difference, an area in which the image is not shown is irregular, and therefore, it is preferable to prepare a parameter for which portion is to be filled per individual case. It is preferable to be performed behind a coordinate conversion processor 703 as a coordinate convertor in FIGs. 37A and 38A. Because if it is performed before the coordinate conversion processor 703, non-consecutive points are needed in coordinate conversion, and therefore, it is difficult to be implemented.

Next, calculation processing of a color image and a brightness image performed by a coordinate conversion processor 706 illustrated in FIG. 38A will be explained.

In a case where an image sensor with a color filter and a polarization filter of S-polarization/P-polarization are used, only a pixel of P-polarization is extracted, and in order to convert to a simple average or apparent brightness for human eyes of the pixel, a weighted average is calculated by the following expressions, and a brightness value is calculated. In a case where the color filter is arranged in an arrangement illustrated in FIG. 42A, and the polarization filter is arranged in an arrangement illustrated in FIG. 42B, brightness is calculated by the following expressions.

In the simplest manner, the following simple sum is used.

$$Y=R11+G21+B22$$

Or, in a case of corresponding the brightness value to the apparent brightness for human eyes as close as possible, the following expression is used.

$$Y=0.299*R11+0.587*G21+0.114*B22$$

(Y is a brightness signal)

In an RGB color system, by pixel values of RGB, color difference signals are made by the following expressions.

$$Cr=0.500*R11-0.419*G21-0.081*B22$$

$$Cb=-0.169*R11-0.332*G21+0.500*B22$$

(Cr, Cb are color difference signals)

Next, crosstalk cancellation performed by a crosstalk cancellation processor 702 illustrated in FIG. 37A will be explained. Ideally, left and right images are formed on a sensor as P-polarization and S-polarization, and the left and right images are completely separated by a polarization filter on the sensor. However, actually, due to a characteristic of a polarizer of a cross prism, even in a case where only S-polarized light is supposed to be reflected, not only S-polarized light but also P-polarized light is partially reflected, and vice versa. Additionally, wire-grid-structured polarizers placed on a sensor are not correspondingly placed on pixels of the sensor, and actually a subtle shift occurs between positions of the pixels of the sensor and positions of the polarizers. Therefore, a weak left image is overlapped with a right image, and a weak right image is overlapped with a left image. This is called crosstalk hereinafter. It is possible to cancel the crosstalk in the obtained left and right images by calculating by the following expressions.

$$S=Sin-cc*Pin \cdots(1)$$

$$P=Pin-cc*Sin \cdots(2)$$

$$Scrosstalkcancel=S*(1+cc)/(1-cc\hat{}2) \cdots(3)$$

$$Pcrosstalkcancel=P*(1+cc)/(1-cc\hat{}2) \cdots(4)$$

Note that in the above expressions (1) to (4), cc: crosstalk cancellation coefficient, Sin and Pin: input signals, and Scrosstalkcancel and Pcrosstalkcancel: S and P component signals in which the crosstalk is cancelled.

Since there is a case where a crosstalk amount is different depending on a location on an image plane, it is preferable to have a table of amounts of cc in accordance with the location on the image plane.

The basis of the above expressions is explained below.

In each pixel, due to the crosstalk, the following signals are inputted.

$$Sin=(1-c)*Sori+c*Pori \cdots(5)$$

$$Pin=(1-c)*Pori+c*Sori \cdots(6)$$

Note that in the above expressions (5) and (6), c: crosstalk amount, Sori and Pori: genuine input signals in which there is no crosstalk.

When the expression (5) is substituted for the expression (1),

$$S=(1-c)*Sori+c*Pori-cc*Pin \cdots(7)$$

And further, when the expression (6) is substituted for the expression (7),

$$S=(1-c)*Sori+c*Pori-cc*((1-c)*Pori+c*Sori)$$
$$=(1-c)*Sori+c*Pori-cc*Pori+cc*c*Pori-cc*c*Sori$$
$$=(1-c-cc*c)*Sori+(c-cc+cc*c)*Pori$$

Here, when c=cc/(1+cc),

$$S=(1-cc/(1+cc)-cc^2/(1+cc))*Sori$$
$$=(1-cc^2)/(1+cc)*Sori$$

Conversely, when Sori is solved, Sori=S * (1+cc)/(1-cc^2), which is the same as the expression (3), is obtained.

Next, coordinate-conversion processing performed by the coordinate conversion processor 703 illustrated in each of FIGs. 37A and 38A will be explained.

In order to obtain higher distance-measuring performance, correction processing that corrects distortion of a lens is needed, and correcting the distortion of the lens is performed by coordinate-conversion processing. Parameters of distortion correction amounts can be lens design values, or calibration of parameters can be performed individually. And, there also is a production error in a combining prism itself, which is placed in front of a lens, and therefore, in order to correct it, it is preferable to concurrently perform correction of external parameters performed in a general stereo camera in the coordinate-conversion processing.

Firstly, as specific examples of the coordinate-conversion processing, principles of lateral chromatic aberration correction and distortion correction will be explained. In a case of a monochrome sensor, only the distortion correction is performed, and in a case of a color sensor, in addition to the distortion correction, it is preferable to also perform the lateral chromatic aberration correction. As schematically illustrated in FIG. 43, in a case where photographing is performed by use of an optical system having lateral chromatic aberration and distortion, pixel data positioned at a position (pixel) denoted by reference number 1 in an upper right in the drawing as an original position is shifted from the original position due to distortion. Additionally, due to lateral chromatic aberration, each of RGB color components (R color component, G color component, and B color component) of the pixel data is differently shifted, and, as illustrated in FIG. 44, each of the RGB color components actually captured by an image sensor is positioned at a position denoted by each of reference numbers 2 (R), 3 (G), and 4 (B). In the lateral chromatic aberration correction and the distortion correction, as illustrated in FIGs 45A and 45B, each RGB color component of the pixel data positioned at the position (pixel) denoted by each of reference numbers 2 (R), 3 (G), and 4 (B) is copied at the position (pixel) denoted by reference number 1 as the original position. That is, coordinate conversion is performed. Here, each of the positions denoted by reference numbers 2, 3, and 4 is a source coordinate of coordinate conversion, and the position denoted by reference number 1 is a destination coordinate of coordinate conversion. From optical system design data, the magnitude of distortion and the magnitude of lateral chromatic aberration are known, and therefore, it is possible to calculate a positional shift of each RGB color component with respect to an original position. And based on data of coordinates of position, polynomial expressions and tables are prepared, and based on such information, distortion and lateral chromatic aberration are corrected.

Next, disparity calculation processing performed by a disparity calculation processor 704 in each of FIGs. 37A and 38A will be explained.

Regarding block matching processing, there are various methods as described below; however, in the embodiment of the present invention, a brightness difference based on a polarization ratio of reflected light itself of an object occurs in left and right images, and therefore, it is preferable to be a method in which normalization is performed in a block. Thus, the brightness difference based on the polarization ratio of the reflected light itself is cancelled, and it is possible to use only a pattern for disparity calculation. In particular, it is preferable to use methods such as ZSAD, ZSSD, and ZNCC, which start with "Z", of the following methods.

(1) SAD (Sum of Absolute Difference)

SAD is a method in which matching between images is performed by directly subtracting a brightness value. In SAD, calculation effort is small.

$$R_{SAD} = \sum_{j=0}^{N-1} \sum_{i=0}^{M-1} \left| I(i,j) - T(i,j) \right| \qquad \cdots \ (8)$$

(2) SSD (Sum of Squared Difference)

SSD is a method in which matching between images is performed by directly subtracting a brightness value, in the same way as SAD. However, unlike SAD, a square value is taken as an error amount.

$$R_{SSD} = \sum_{j=0}^{N-1} \sum_{i=0}^{M-1} (I(i,j) - T(i,j))^2 \qquad \cdots \ (9)$$

(3) ZSAD (Zero mean Sum of Absolute Difference)

ZSAD is a method in which an average value of each block is subtracted from the expression of SAD.

$$R_{ZSAD} = \sum_{j=0}^{N-1} \sum_{i=0}^{M-1} \left| (I(i,j) - \bar{I}) - (T(i,j) - \bar{T}) \right| \qquad \cdots \ (10)$$

(4) ZSSD (Zero mean Sum of Squared Difference)

ZSSD is a method in which an average value of each block is subtracted from the expression of SSD.

$$R_{ZSSD} = \sum_{j=0}^{N-1} \sum_{i=0}^{M-1} \left[ (I(i,j) - \bar{I}) - (T(i,j) - \bar{T}) \right]^2 \qquad \cdots \ (11)$$

NCC (Normalized Cross Correlation)

NCC is normalized cross correlation, and has a characteristic of being insusceptible to brightness and contrast.

$$R_{ZSSD} = \frac{\sum_{j=0}^{N-1} \sum_{i=0}^{M-1} I(i,j) T(i,j)}{\sqrt{\sum_{j=0}^{N-1} \sum_{i=0}^{M-1} I(i,j)^2 \times \sum_{j=0}^{N-1} \sum_{i=0}^{M-1} T(i,j)^2}} \qquad \cdots \ (12)$$

(5) ZNCC (Zero mean Normalized Cross Correlation)

ZNCC is a method in which an average value of each block is subtracted from NCC.

$$R_{ZNCC} = \frac{\sum_{j=0}^{N-1}\sum_{i=0}^{M-1}((I(i,j)-\bar{I})(T(i,j)-\bar{T}))}{\sqrt{\sum_{j=0}^{N-1}\sum_{i=0}^{M-1}(I(i,j)-\bar{I})^2 \times \sum_{j=0}^{N-1}\sum_{i=0}^{M-1}(T(i,j)-\bar{T})^2}} \quad \cdots \quad (13)$$

Next, sub-pixel estimation processing performed by a sub-pixel estimation processor 704-2 illustrated in FIGs. 37B and 38B will be explained.

In order to perform highly-accurate disparity calculation, by equiangular linear fitting and parabolic fitting illustrated in FIGs. 46A and 46B, the sub-pixel estimation processing that performs matching of a pixel equal to or smaller than one pixel is performed.

In equiangular linear fitting, a sub-pixel estimation value is estimated as follows.
Sub-pixel estimation value by equiangular linear fitting

$$\hat{d} = \begin{cases} \dfrac{1}{2}\dfrac{R(1)-R(-1)}{R(0)-R(-1)} & R(1) < R(-1) \\[2mm] \dfrac{1}{2}\dfrac{R(1)-R(-1)}{R(0)-R(1)} & R(1) \geq R(-1) \end{cases} \quad \cdots \quad (14)$$

R(d)=dissimilarity function

In parabolic fitting, a sub-pixel estimation value is estimated as follows. Sub-pixel estimation value by parabolic fitting

$$\hat{d} = \frac{R(-1)-R(1)}{2R(-1)-4R(0)+2R(1)} \quad \cdots \quad (15)$$

Next, polarization calculation processing will be explained.

As a method of extracting a difference in a region where matching is performed, after block matching is performed by a disparity calculation, a ratio (difference) between an S-polarized component and a P-polarized component between blocks where matching is performed is calculated. In this method, in a case where matching is successful, a good result is obtained; however, in a portion where the S-polarized component and the P-polarized component are greatly shifted, there is a possibility that matching is not successful and no result is obtained. On the other hand, as a method of extracting a portion where matching is not successful, there is a method of outputting an error regarding a pixel portion that is not matched at all by the disparity calculation. That is, a portion where a searching region by the disparity calculation is exceeded, or the ratio between the P-polarized component and the S-polarized component is greatly different is detected. The larger the difference between the P-polarized component and the S-polarized component is, the more the portion where matching is not successful is detected, and therefore, this method is effective in a case where block matching is not successful. Polarization information extracted by the above method can be used for road end (road surface) detection, or detection of a frozen portion on a road surface.

The present invention provides the following aspects.

(1) A stereo camera that obtains an image having disparity with respect to a photographic subject, including: a polarization combiner that combines optical paths of left light and right light, directions of polarization of which are different in a perpendicular direction and which form two images having disparity, into one; an imager that captures an image having at least two polarized components; and an optical member that focuses the combined left light and the right light onto the imager.

(2) The stereo camera according to (1), including: a distance-measuring device that forms two images having disparity and calculates a distance to the photographic subject based on the disparity between the two formed images by dividing an image captured by the imager per polarized component.

(3) The stereo camera according to (1), in which the polarization combiner adjusts optical path lengths in the optical paths of the left light and the right light to be approximately the same as each other.

(4) The stereo camera according to (3), in which the polarization combiner includes a polarization beam splitter, and a mirror.

(5) The stereo camera according to (4), in which the polarization combiner includes a polarizer.

(6) The stereo camera according to (5), in which the polarization combiner includes a half-wave plate that polarizes either of the left light and the right light.

(7) The stereo camera according to (5), in which the polarization combiner includes two quarter-wave plates that polarize the left light and the right light, respectively.

(8) The stereo camera according to (6), in which between the polarization combiner and the optical member, an optical aperture that adjusts an amount of light incident onto the optical member is placed.

(9) The stereo camera according to (8), in which the polarization beam splitter includes a polarizing plate that has a surface on which a wire-grid-structured polarizer film is formed.

(10) The stereo camera according to (3), in which the polarization combiner includes a cross prism.

(11) The stereo camera according to (10), in which the cross prism includes a polarizing plate that has a surface on which a wire-grid-structured polarizer film is formed.

(12) The stereo camera according to (11), in which on side faces of the cross prism that face each other, triangular prisms, quadrilateral prisms, or mirrors are adjacently provided left and right, respectively.

(13) The stereo camera according to (12), including a coordinate convertor that performs coordinate-conversion processing with respect to at least one of the two images having the disparity.

(14) The stereo camera according to (1), in which the polarization combiner includes a half mirror and a polarizer.

(15) The stereo camera according to (14), in which between the photographic subject and the imager, an infrared cut filter is provided.

According to the embodiment of the present invention, optical paths of left light and right light that form two images having disparity are combined, and the combined light is focused onto an imager via an optical member. Therefore, in a case where distortion of the optical member changes due to a change in temperature, the distortion of the optical member affects the light that forms the two images having the disparity in the same way, respectively. In a case where a mounting position of the imager is shifted due to the change in temperature, by the shift of the mounting position, the light that forms the two images having the disparity changes on a light-receiving surface of the imager in the same way, respectively. As a result, the distortion of the optical member and the shift of the mounting position of the imager due to the change in temperature have a small influence on distance calculation to a photographic subject, for example. Thus, it is not necessary to perform calibration including correction of the distortion of the optical member and correction of the shift of the mounting position of the imager due to the change in temperature. Therefore, it is possible to provide a stereo camera that is not affected by the change in the distortion of the lens and the change in the mounting position of the imager due to the change in temperature at low cost.

**Claims**

1. A stereo camera (100) that obtains an image having disparity with respect to a photographic subject, comprising:

   a polarization combiner (231-234) configured to combine optical paths of left light and right light, directions of polarization of which are different in a perpendicular direction and which form two images having disparity, into one;
   a polarizer (101-2, 241, 242, 243) in the optical path or paths of the left and/or right light to the polarization combiner;
   an imager (202) configured to capture an image having at least two polarized components; and
   an optical member (204) configured to focus the combined left light and right light onto the imager;
   wherein the polarization combiner includes a polarization beam splitter (231) and prisms (208, 209) defining mirrors (232, 233, 234) and is configured to adjust optical path lengths in the optical paths of the left light and the right light to be approximately the same as each other;

and an optical aperture(235) between the polarization combiner and the optical member, and nearer the prisms (208, 209) than the optical member (204), configured to adjust an amount of light incident onto the optical member.

2. The stereo camera according to Claim 1, comprising:
a distance-measuring device configured to form two images having disparity and to calculate a distance to the photographic subject based on the disparity between the two formed images by dividing an image captured by the imager (202) per polarized component.

3. The stereo camera according to Claim 1 or Claim 2, wherein the polarizer includes a half-wave plate (242) that polarizes either of the left light and the right light.

4. The stereo camera according to Claim 1 or Claim 2, wherein the polarizer includes two quarter-wave plates (243) that polarize the left light and the right light, respectively.

5. The stereo camera according to any one of Claims 1 to 4, wherein the polarization beam splitter (231) includes a polarizing plate that has a surface on which a wire-grid-structured polarizer film is formed.

6. The stereo camera according to any one of the preceding claims, further comprising a crosstalk cancellation processor (702),
wherein the crosstalk cancellation processor is configured to change a crosstalk amount depending on a location on an image plane.

7. The stereo camera according to any one of the preceding claims, wherein a material of part of the prisms (208, 209) is replaced with a material in which birefringence occurs randomly.


**Patentansprüche**

1. Stereokamera (100), die ein Bild mit Disparität mit Bezug auf ein fotografisches Subjekt einholt, die Folgendes umfasst:

einen Polarisationskombinator (231-234), konfiguriert zum Kombinieren von Strahlengängen von linkem Licht und rechtem Licht, von denen sich Polarisationsrichtungen in einer lotrechten Richtung unterscheiden und die zwei Bilder mit Disparität bilden, zu einem;
einen Polarisator (101-2, 241, 242, 243) in die ein oder mehreren Strahlengänge des linken und/oder rechten Lichts zu dem Polarisationskombinator;
einen Imager (202), konfiguriert zum Aufnehmen eines Bildes mit wenigstens zwei polarisierten Komponenten; und
ein optisches Element (204), konfiguriert zum Fokussieren des kombinierten linken Lichts und rechten Lichts auf den Imager;
wobei der Polarisationskombinator einen Polarisationsstrahlenteiler (231) und Prismen (208, 209) aufweist, die Spiegel (232, 233, 234) definieren, und zum Justieren von Strahlenganglängen in den Strahlengängen des linken Lichts und des rechten Lichts konfiguriert ist, so dass sie einander etwa gleich sind;
und eine optische Apertur (235) zwischen dem Polarisationskombinator und dem optischen Element, und näher an den Prismen (208, 209) als an dem optischen Element (204), konfiguriert zum Justieren einer auf das optische Element fallenden Lichtmenge.

2. Stereokamera nach Anspruch 1, die Folgendes umfasst:
eine Distanzmessvorrichtung, konfiguriert zum Bilden von zwei Bildern mit Disparität und zum Berechnen einer Distanz zu dem fotografischen Subjekt auf der Basis der Disparität zwischen den beiden gebildeten Bildern durch Unterteilen eines von dem Imager (202) aufgenommenen Bildes pro polarisierter Komponente.

3. Stereokamera nach Anspruch 1 oder Anspruch 2, wobei der Polarisator eine Halbwellenplatte (242) beinhaltet, die das linke Licht oder das rechte Licht polarisiert.

4. Stereokamera nach Anspruch 1 oder Anspruch 2, wobei der Polarisator zwei Viertelwellenplatten (243) aufweist, die jeweils das linke Licht und das rechte Licht polarisieren.

**5.** Stereokamera nach einem der Ansprüche 1 bis 4, wobei der Polarisationsstrahlenteiler (231) eine Polarisationsplatte aufweist, die eine Oberfläche hat, auf der eine Drahtgitter-strukturierte Polarisatorfolie ausgebildet ist.

**6.** Stereokamera nach einem der vorherigen Ansprüche, die ferner einen Übersprechunterdrückungsprozessor (702) umfasst,
wobei der Übersprechunterdrückungsprozessor zum Ändern eines Übersprechbetrags in Abhängigkeit von einem Ort auf einer Bildebene konfiguriert ist.

**7.** Stereokamera nach einem der vorherigen Ansprüche, wobei ein Material eines Teils der Prismen (208, 209) durch ein Material ersetzt wird, in dem Doppelbrechung zufällig auftritt.


**Revendications**

**1.** Caméra stéréo (100) qui obtient une image présentant une disparité par rapport à un sujet photographique, comprenant :

un combineur de polarisation (231 à 234) configuré pour combiner en une seule des trajets optiques de lumière gauche et de lumière droite, dont les directions de polarisation sont différentes dans une direction perpendiculaire et qui forment deux images présentant une disparité ;
un polariseur (101 à 102, 241, 242, 243) situé sur le ou les trajets optiques de la lumière gauche et/ou droite menant vers le combineur de polarisation ;
un imageur (202) configuré pour capturer une image présentant au moins deux composants polarisés ; et
un élément optique (204) configuré pour concentrer la lumière gauche et la lumière droite combinées sur l'imageur ;
dans laquelle le combineur de polarisation comprend un séparateur de faisceau de polarisation (231) et des prismes (208, 209) définissant des miroirs (232, 233, 234) et est configuré pour ajuster des longueurs de trajet optique au sein des trajets optiques de la lumière gauche et la lumière droite afin qu'elles soient approximativement les mêmes ;
et une fenêtre optique (235) située entre le combineur de polarisation et l'élément optique, et plus près des prismes (208, 209) que de l'élément optique (204), configurée pour ajuster une quantité de lumière incidente sur l'élément optique.

**2.** Caméra stéréo selon la revendication 1, comprenant :
un dispositif de mesure de distance configuré pour former deux images présentant une disparité et pour calculer les distances par rapport au sujet photographique en se basant sur la disparité entre les deux images formées grâce à une étape consistant à diviser une image capturée grâce à l'imageur (202) par composante polarisée.

**3.** Caméra stéréo selon la revendication 1 ou 2, dans laquelle le polariseur comprend une lame demi-onde (242) qui polarise l'une ou l'autre parmi la lumière gauche et la lumière droite.

**4.** Caméra stéréo selon la revendication 1 ou 2, dans laquelle le polariseur comprend deux lames quart d'onde (243) qui polarisent la lumière gauche et la lumière droite, respectivement.

**5.** Caméra stéréo selon l'une quelconque des revendications 1 à 4, dans laquelle le séparateur de faisceau de polarisation (231) comprend une plaque polarisante qui présente une surface sur laquelle est formé un film de polariseur à structure de grille de fils.

**6.** Caméra stéréo selon l'une quelconque des revendications précédentes, comprenant en outre un processeur d'annulation de diaphonie (702),
dans laquelle le processeur d'annulation de diaphonie est configuré pour modifier une quantité de diaphonie en fonction d'un emplacement sur un plan d'image.

**7.** Caméra stéréo selon l'une quelconque des revendications précédentes, dans laquelle un matériau d'une partie des prismes (208, 209) est remplacé par un matériau au sein duquel une biréfringence survient de manière aléatoire.

# FIG. 1A

# FIG. 1B

# FIG. 2A

# FIG. 2B

## FIG. 3

208                          205              209

Z → Y
X

LIGHT BEAM
EFFECTIVE
RANGE

LIGHT BEAM
EFFECTIVE
RANGE

## FIG. 4

ANGLE OF VIEW RANGE                    ANGLE OF VIEW RANGE

205

Z
X → Y

208          209
206          207
210
204
203
202
201

## FIG. 5

301

ANGLE OF
VIEW RANGE

302

# FIG. 6

# FIG. 7

# FIG. 8

ANGLE OF
VIEW RANGE

ANGLE OF
VIEW RANGE

213
214
215
216

208
206

209
207

205

204

Z
X Y

203
202
201

# FIG. 9

221

220

ANGLE OF
VIEW RANGE

213

ANGLE OF
VIEW RANGE

223

222

224

208
206

209
207

205

204

Z
X Y

203
202
201

# FIG.10

ANGLE OF VIEW RANGE         ANGLE OF VIEW RANGE

205

230

208

230

209

Z

X

Y

204

203
202
201

# FIG.11A

α =52 DEGREES

# FIG.11B

α =45 DEGREES

# FIG.12

α =52 DEGREES

## FIG.13

α=52 DEGREES

## FIG.14

α=52 DEGREES

## FIG.15

α=52 DEGREES

# FIG.16

α=52 DEGREES

# FIG.17

α=52 DEGREES

# FIG.18

α=52 DEGREES

# FIG.19

ANGLE OF VIEW RANGE    ANGLE OF VIEW RANGE

240  205    240

Z

X Y

208  209

204

203
202
201

# FIG.20

34 10

2   3

24

44

1

4

14

## FIG.21

## FIG.22

OPTICAL PATH I1

OPTICAL PATH I2

## FIG.23

OPTICAL PATH I3

OPTICAL PATH I4

# FIG.24

500[nm]

# FIG.25

# FIG.26

# FIG.27

# FIG.28

# FIG.29

# FIG.30

OPTICAL OPTICAL
PATH I2 PATH I1

# FIG.31

OPTICAL OPTICAL
PATH I3 PATH I4

# FIG.32

# FIG.33A

# FIG.33B

# FIG.33C

## FIG.34A

## FIG.34B

## FIG.34C

# FIG.35

402    403    401

400

OPTICAL
FILTER 13

500

S-COMPONENT    P-COMPONENT
TRANSMISSION   TRANSMISSION

S-COMPONENT    P-COMPONENT
TRANSMISSION   TRANSMISSION

| MONO-CHROME | MONO-CHROME |
| MONO-CHROME | MONO-CHROME |

# FIG.36

# FIG.37A

# FIG.37B

## FIG.38A

COLOR INFORMATION/BRIGHTNESS INFORMATION CALCULATOR — 705

COLOR IMAGE/ BRIGHTNESS IMAGE

COORDINATE CONVERSION PROCESSOR — 706 → COLOR IMAGE BRIGHTNESS IMAGE

POLARIZATION SEPARATION PROCESSOR — 701 → CROSSTALK CANCELLATION PROCESSOR — 702 → COORDINATE CONVERSION PROCESSOR — 703 → DISPARITY CALCULATION PROCESSOR — 704

POLARIZATION IMAGE 1

POLARIZATION IMAGE 2

→ BRIGHTNESS IMAGE
→ DISPARITY IMAGE
→ POLARIZATION IMAGE

## FIG.38B

DISPARITY CALCULATION PROCESSOR — 704

POLARIZATION IMAGE 1 →
POLARIZATION IMAGE 2 →

BLOCK MATCHING PROCESSOR — 704-1

SUB-PIXEL ESTIMATION PROCESSOR — 704-2 → DISPARITY IMAGE

POLARIZATION INFORMATION ESTIMATOR — 704-3 → POLARIZATION IMAGE

EP 2 875 315 B1

# FIG.39

ENTIRE INPUT IMAGE

OUTPUT IMAGE

S-IMAGE

P-IMAGE

ENLARGED PIXEL

# FIG.40

# FIG.41A

# FIG.41B

# FIG.42A

| R11 | G12 | R11 | G12 | R11 | G12 |
|-----|-----|-----|-----|-----|-----|
| G21 | B22 | G21 | B22 | G21 | B22 |
| R11 | G12 | R11 | G12 | R11 | G12 |
| G21 | B22 | G21 | B22 | G21 | B22 |
| R11 | G12 | R11 | G12 | R11 | G12 |
| G21 | B22 | G21 | B22 | G21 | B22 |

# FIG.42B

| P11 | S12 | P11 | S12 | P11 | S12 |
|-----|-----|-----|-----|-----|-----|
| P21 | P22 | P21 | P22 | P21 | P22 |
| P11 | S12 | P11 | S12 | P11 | S12 |
| P21 | P22 | P21 | P22 | P21 | P22 |
| P11 | S12 | P11 | S12 | P11 | S12 |
| P21 | P22 | P21 | P22 | P21 | P22 |

# FIG.43

# FIG.44

# FIG.45A

LATERAL CHROMATIC ABERRATION CORRECTION

# FIG.45B

DISTORTION CORRECTION

# FIG.46A

**EQUIANGULAR LINEAR FITTING**

○ OPTIMAL POSITION PER PIXEL UNIT

● SUB-PIXEL ESTIMATION RESULT

# FIG.46B

**PARABOLIC FITTING**

○ OPTIMAL POSITION PER PIXEL UNIT

● SUB-PIXEL ESTIMATION RESULT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010243463 A
- US 7061532 B
- JP S62217790 B
- US 4295153 A